(19) Europäisches Patentamt
European Patent Office
Office européen des brevets

(11) EP 2 579 091 A1

(12) # EUROPEAN PATENT APPLICATION
published in accordance with Art. 153(4) EPC

(43) Date of publication:
**10.04.2013 Bulletin 2013/15**

(21) Application number: **11792370.6**

(22) Date of filing: **03.06.2011**

(51) Int Cl.:
***G02F 1/1337*** *(2006.01)* ***C08G 73/10*** *(2006.01)*

(86) International application number:
**PCT/JP2011/062837**

(87) International publication number:
**WO 2011/155413 (15.12.2011 Gazette 2011/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.06.2010 JP 2010130232**

(71) Applicant: **Sharp Kabushiki Kaisha**
**Osaka-shi, Osaka 545-8522 (JP)**

(72) Inventors:
- **TERAOKA, Yuko**
  **Osaka-shi, Osaka 545-8522 (JP)**
- **TERASHITA, Shinichi**
  **Osaka-shi, Osaka 545-8522 (JP)**
- **MIYAKE, Isamu**
  **Osaka-shi, Osaka 545-8522 (JP)**
- **MATSUHASHI, Kouichi**
  **Osaka-shi, Osaka 545-8522 (JP)**
- **MIYACHI, Koichi**
  **Osaka-shi, Osaka 545-8522 (JP)**
- **NAKAMURA, Yoshinobu**
  **Osaka-shi, Osaka 545-8522 (JP)**
- **HAYAMA, Takafumi**
  **Osaka-shi, Osaka 545-8522 (JP)**
- **YASHIRO Yuhji**
  **Osaka-shi, osaka 545-8522 (JP)**

(74) Representative: **Müller - Hoffmann & Partner**
**Patentanwälte**
**Innere Wiener Strasse 17**
**81667 München (DE)**

(54) **LIQUID CRYSTAL DISPLAY DEVICE**

(57) The present invention provides a liquid crystal display device in which a good alignment state can be obtained, and the occurrence of AC image sticking can be suppressed. The present invention is a liquid crystal display device including a liquid crystal layer including liquid crystal molecules and being interposed between a pair of substrates, and an alignment layer provided on a side of the liquid crystal layer in at least one of the substrates, wherein the alignment layer includes a liquid crystal alignment polymer having a property of controlling and aligning the liquid crystal molecules, and the surface side chain density in the alignment layer is not less than 2.0.

Fig. 1

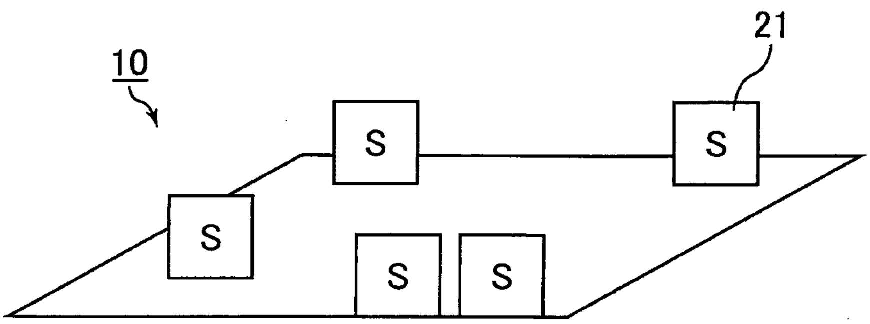


EP 2 579 091 A1

**Description**

TECHNICAL FIELD

The present invention relates to a liquid crystal display device. More specifically, the present invention relates to a liquid crystal display device having wide viewing angle characteristics suitable for flat displays for Personal Digital Assistants, personal computers, word processors, amusement apparatuses, educational apparatuses, and television sets used by many users, and display panels, display windows, display doors, display walls and the like using a liquid crystal shutter effect.

BACKGROUND ART

At present, liquid crystal display devices are widely used in personal computers, televisions, word processors and the like as a display device that realizes a thin profile and light weight. What is important for display properties of the liquid crystal display device is not only a liquid crystal material to be used, but also an alignment layer for uniformly aligning liquid crystals.

With respect to the alignment layer, as a liquid crystal alignment agent for realizing good response time properties, a liquid crystal alignment agent having a polyamic acid has been disclosed in which the polyamic acid has a side chain density within a predetermined range (for example, see Patent Literature 1). The side chain density is calculated from the side chain density of diamine calculated from the molecular formula thereof and the weight of the materials for the polyamic acid, i.e., diamine and tetracarboxylic dianhydride.

Particularly, recently, as the size of the liquid crystal display device becomes larger, it is more important to uniformly and efficiently treat the alignment layer. Moreover, along with higher-definition of the liquid crystal display device, the so-called image sticking phenomenon that an image remains on a display screen needs to be solved. Suppression in the image sticking phenomenon is strongly demanded. As the image sticking phenomenon, image sticking in a remaining direct current (DC) mode (hereinafter, also referred to as a DC image sticking) is usually widely known. Moreover, various techniques concerning the liquid crystal alignment agent have been disclosed (for example, see Patent Literatures 2 to 6).

Moreover, the display properties are greatly changed according to the direction of observation in a liquid crystal display device subjected to a unidirectional liquid crystal aligning treatment within a substrate plane, for example, liquid crystal display devices in a Twisted Nematic (TN) mode, an Electrically Controlled Birefringence (ECB) mode, a Vertical Alignment Twisted Nematic (VATN) mode, and the like. For this reason, the direction in which the image sticking phenomenon is observed is limited to the front direction and a direction depending on the display properties of the liquid crystal alignment mode. Meanwhile, in the liquid crystal TVs and large screen displays for information, liquid crystal multi-domains are provided for viewing angle compensation during white display. Accordingly, in the multi-domain mode in which the viewing angle compensation is provided, the image sticking phenomenon is observed uniformly in all the directions. For this reason, improvement in the image sticking phenomenon is needed and essential.

Moreover, recently, various photo-alignment methods have been proposed in which an alignment layer (photo-alignment layer) is subjected to an aligning treatment by irradiating the alignment layer with light such as polarized ultraviolet light (for example, see Patent Literatures 7 to 12 and Non-Patent Literatures 1 and 2).

CITATION LIST

- Patent Literature

Patent Literature 1: JP 2006-267823 A
Patent Literature 2: JP 2005-250244 A
Patent Literature 3: JP 2006-10896 A
Patent Literature 4: JP 2006-52317 A
Patent Literature 5: JP 2008-299317 A
Patent Literature 6: Japanese Patent No. 4434862
Patent Literature 7: JP 2001-517719 T
Patent Literature 8: JP 2003-520878 T
Patent Literature 9: JP 2009-216788 A
Patent Literature 10: JP 2009-520702 T
Patent Literature 11: JP 2007-256484 A

Patent Literature 12: WO 2008/117615

- Non-Patent Literature

Non-Patent Literature 1: Masaki Hasegawa, "Photo-Alignment: an Aligning Treatment from the Viewpoint of Production Process," Liquid Crystal, The Japanese Liquid Crystal Society, January 25, 1999, Vol. 3, No. 1, pp. 3-16
Non-Patent Literature 2: Kiyoshi Sawahata, "Trends in Development of Material for LCD Alignment Layer," Liquid Crystal, The Japanese Liquid Crystal Society, October 25, 2004, Vol. 8, No. 4, pp. 216-224

SUMMARY OF INVENTION

- Technical Problem

The photo-alignment method provides very uniform alignment of the liquid crystals and high workability, but is susceptible to improvement in the properties such as the image sticking phenomenon.

The photo-alignment method is an alignment method in which the alignment layer is irradiated with (exposed to) light such as polarized ultraviolet light to produce an alignment regulating force in the alignment layer and/or change an alignment regulating direction in the alignment layer.

In the photo-alignment method substituted for the rubbing method, the mechanism to produce the image sticking is not clarified, and the solution has not been proposed. For example, in a vertical photo-alignment layer, not only strong DC image sticking but also image sticking caused by change in a pretilt angle by applying an alternating current (AC) voltage (hereinafter, also referred to as an AC image sticking) may be produced.

The strong AC image sticking may be produced particularly in the photo-alignment layer having a photofunctional group that can undergo a photoreaction (such as a photocrosslinking reaction (including a photodimerization reaction), a photoisomerization reaction, and a photolytic reaction) to give a pretilt angle to liquid crystal molecules.

In the photo-alignment method, a desired alignment state may not be obtained. For example, a desired pretilt angle may not be obtained, resulting in light leakage. Moreover, an unnecessary domain may be produced in switching the voltage on/off.

The present invention has been made in consideration of such circumstances. An object of the present invention is to provide a liquid crystal display device in which a good alignment state can be obtained, and the occurrence of the AC image sticking can be suppressed.

- Solution to Problem

The present inventors paid attention to the density of the side chain provided on the surface of the alignment layer as a result of extensive research on liquid crystal display devices in which a good alignment state can be obtained, and the occurrence of the AC image sticking can be suppressed.

Here, using Fig. 17, the relationship among the side chain provided on the surface of the alignment layer, alignment control, and the AC image sticking will be described in an example of a vertical photo-alignment layer.

As shown in Fig. 17(a), the vertical photo-alignment layer has a main chain 31 and a vertical alignable side chain 21a having a photofunctional group. The side chain 21a is provided on the surface of the alignment layer. If the vertical photo-alignment layer is irradiated with the light, the side chains 21a align in a predetermined direction. Then, the aligned side chains 21a interact with liquid crystal molecules 11, and the liquid crystal molecules 11 vertically align at a pretilt angle. At this time, the alignment of the liquid crystal molecule 11 is greatly influenced by the amount of the side chain 21a to be provided on the surface of the vertical photo-alignment layer.

As shown in Fig. 17(b), if the amount of the side chain 21a is small, a force to regulate the alignment of the liquid crystal molecule 11 may be weak, and a desired pretilt angle may not be obtained. In this case, if the voltage is applied for a long time and the liquid crystal molecules 11 are continuously tilted in the horizontal direction to a substrate, the side chains 21a remain tilted as shown in Fig. 17(c) even if the voltage is reduced or stopped to be applied later. The liquid crystal molecules 11 are not returned to be vertical, and are kept aligned in the horizontal direction. As a result, the AC image sticking may be produced. Even if the side chains 21a are not tilted, the liquid crystal molecules 11 may be adsorbed to the main chain 31 as shown in Fig. 17(d), and kept aligned in the horizontal direction, causing the AC image sticking.

Moreover, as shown in Fig. 17(e), when the vertical photo-alignment layer includes the side chain 21a and a vertical alignable side chain 21b having no photofunctional group, the amount of the side chain 21a is relatively small. Accordingly, an ability to give the pretilt angle to the liquid crystal molecules 11 may be reduced, and the alignment of

the liquid crystal molecule 11 may not be controlled. Namely, the vertical photo-alignment layer may not function as the photo-alignment layer.

As above, using an example of the vertical photo-alignment layer, the relationship among the side chain, alignment control, and the AC image sticking has been described, but such a relationship is not limited to the vertical photo-alignment layer. It is thought that there is the relationship also found in the alignment layers in general which are formed by applying a liquid crystal alignment agent containing a polymer having a side chain.

The constitutional material for the alignment layer is usually formed by polymerizing a monomer having a portion that becomes a side chain. In the related art, the amount of the side chain in the alignment layer is controlled during polymerization by adjusting the proportion (molar ratio or weight ratio) of the monomer. The present inventors, however, found out that the amount of the side chain appearing on the surface of the alignment layer after actual formation of the layer is different from the amount of the side chain in the proportion in the polymerization.

As a result of further research, the present inventors conceived that the problem can be clearly solved by controlling a surface side chain density to be not less than 2.0, the surface side chain density being the ratio of the concentration of the side chain on the topmost surface determined by analysis of the surface of the alignment layer to the concentration of the side chain determined based on the molecular structural formula. Thus, the present invention has been achieved.

Namely, one aspect of the present invention is a liquid crystal display device (hereinafter, also referred to as a first liquid crystal display device according to the present invention) comprising a liquid crystal layer including liquid crystal molecules and being interposed between a pair of substrates, and an alignment layer provided on a side of the liquid crystal layer in at least one of the substrates, wherein the alignment layer comprises a liquid crystal alignment polymer having a property of controlling and aligning the liquid crystal molecules, and a surface side chain density represented by the following expression is not less than 2.0.

Another aspect of the present invention is a liquid crystal display device (hereinafter, also referred to as a second liquid crystal display device according to the present invention) comprising a liquid crystal layer including liquid crystal molecules and being interposed between a pair of substrates, and an alignment layer provided on a side of the liquid crystal layer in at least one of the substrates, wherein the alignment layer comprises a liquid crystal alignment polymer, the liquid crystal alignment polymer has a property of controlling and aligning the liquid crystal molecules, the alignment layer is formed by applying a liquid crystal alignment agent containing a first constitutional material as a material for the liquid crystal alignment polymer, and a surface side chain density represented by the following expression is not less than 2.0.

[Math. 1]

$$\text{Surface side chain density} = \frac{\text{(Concentration of side chain on the topmost surface)}}{\text{(Concentration of side chain based on the molecular structural formula)}}$$

The concentration of a side chain on the topmost surface is a concentration of a side chain indexing atom on the surface of the alignment layer, and measured using X-ray photoelectron spectroscopy.

In the first liquid crystal display device according to the present invention, the concentration of the side chain based on the molecular structural formula is a concentration of the side chain indexing atom contained in the repeating unit in the liquid crystal alignment polymer, and determined from the structural formula of the liquid crystal alignment polymer. The side chain indexing atom is contained in the side chain of the liquid crystal alignment polymer but not in the main chain thereof.

Meanwhile, in the second liquid crystal display device according to the present invention, the concentration of the side chain based on the molecular structural formula is a concentration of the side chain indexing atom contained in the repeating unit in the first constitutional material before the liquid crystal alignment agent is applied, and determined from the structural formula of the first constitutional material. The side chain indexing atom is contained in the side chain of the first constitutional material but not in the main chain thereof.

In the first and second liquid crystal display devices according to the present invention, at a surface side chain density less than 2.0, a good alignment state may not be obtained, or the AC image sticking may not be sufficiently suppressed.

The configurations of the first embodiment of the liquid crystal display device and the second embodiment of the liquid crystal display device of the present invention are not especially limited as long as they essentially include such components.

Preferable embodiments of the first embodiment of the liquid crystal display device and the second embodiment of the liquid crystal display device of the present invention are mentioned in more detail below.

In the first liquid crystal display device according to the present invention, the liquid crystal alignment polymer is suitably formed by applying the liquid crystal alignment agent containing the first constitutional material as a material for the liquid crystal alignment polymer.

In the first and second liquid crystal display devices according to the present invention, the alignment layer is preferably a photo-alignment layer.

In the first and second liquid crystal display devices according to the present invention, when the alignment layer is a photo-alignment layer, the liquid crystal molecule has negative dielectric anisotropy. The alignment layer aligns the liquid crystal molecules substantially vertical to the surface of the alignment layer when no voltage is applied to the liquid crystal layer, and the alignment layer is provided in each of the substrates. Preferably, in the liquid crystal display device, when the pair of substrates is seen in planar view, an alignment direction of the liquid crystal molecule on the surface of the alignment layer provided in one of the substrates intersects orthogonally to an alignment direction of the liquid crystal molecule on the surface of the alignment layer provided in the other of the substrates. More preferably, at this time, the liquid crystal display device has a plurality of domains such as four domains within a pixel. At this time, in the orthogonal intersection of the alignment directions, an angle made by the alignment directions does not need to be precisely 90°, and the angle may be within the range of 80 to 100° (suitably 87 to 93°).

In the first and second liquid crystal display devices according to the present invention, the alignment layer is preferably a vertical alignment layer.

In the first and second liquid crystal display devices according to the present invention, preferably, the alignment layer is obtained by applying the liquid crystal alignment agent to form a layer and performing an aligning treatment on the layer by irradiation with light, and the first constitutional material develops a property of controlling and aligning the liquid crystal molecules by the irradiation with the light.

In the first and second liquid crystal display devices according to the present invention, a side chain of the liquid crystal alignment polymer preferably has a photofunctional group.

In the first and second liquid crystal display devices according to the present invention, a side chain of the first constitutional material preferably has a photofunctional group.

In the first and second liquid crystal display devices according to the present invention, the photofunctional group is preferably at least one photofunctional group selected from the group consisting of a coumarin group, a cinnamate group, a chalcone group, an azobenzene group, and a stilbene group.

In the first and second liquid crystal display devices according to the present invention, the photofunctional group preferably undergoes at least one of a photoisomerization reaction and photo-realignment.

In the first and second liquid crystal display devices according to the present invention, the photofunctional group may undergo a photocrosslinking reaction (including a dimerization reaction).

In the first and second liquid crystal display devices according to the present invention, preferably, the liquid crystal alignment polymer is a polyimide, and the concentration of the side chain based on the molecular structural formula is calculated based on a repeating unit including a main chain structure of a polyamic acid when an imidizing rate of the polyimide is less than 100%, and calculated based on a repeating unit including a main chain structure of the polyamic acid supposing that the polyimide is a polyamic acid not imidized when the imidizing rate of the polyimide is 100%.

In the first and second liquid crystal display devices according to the present invention, preferably, the first constitutional material is a polyamic acid or a polyimide; and the concentration of the side chain based on the molecular structural formula is calculated from a repeating unit of the polyamic acid when the first constitutional material is the polyamic acid, calculated based on a repeating unit including the main chain structure of a polyamic acid when the first constitutional material is the polyimide and the imidizing rate of the polyimide is less than 100%, and calculated based on a repeating unit including a main chain structure of a polyamic acid supposing that the polyimide is a polyamic acid not imidized when the imidizing rate of the polyimide is 100%.

In the first and second liquid crystal display devices according to the present invention, the imidizing rate of the polyimide is preferably not more than 80%.

In the first and second liquid crystal display devices according to the present invention, the alignment layer may contain no non-alignable substance having no property of controlling and aligning the liquid crystal molecules.

In the first and second liquid crystal display devices according to the present invention, the liquid crystal alignment agent may contain no second constitutional material having no property of controlling and aligning the liquid crystal molecules.

In the first and second liquid crystal display devices according to the present invention, the alignment layer may contain the non-alignable substance having no property of controlling and aligning the liquid crystal molecules.

In the first and second liquid crystal display devices according to the present invention, the liquid crystal alignment agent may contain the first constitutional material and the second constitutional material having no property of controlling and aligning the liquid crystal molecules.

In the first and second liquid crystal display devices according to the present invention, a proportion of the first constitutional material to a total of the first constitutional material and the second constitutional material is preferably not less than 10% by weight.

In the first and second liquid crystal display devices according to the present invention, the alignment layer may have a stack structure including an upper layer containing the liquid crystal alignment polymer and a lower layer containing the non-alignable substance.

In the first and second liquid crystal display devices according to the present invention, the alignment layer may have a stack structure including an upper layer formed using the first constitutional material and a lower layer formed using the second constitutional material.

In the first and second liquid crystal display devices according to the present invention, preferably, the liquid crystal alignment polymer includes a constitutional unit A as an essential constitutional unit, the constitutional unit A having the property of controlling and aligning the liquid crystal molecules which is developed by irradiation with light, or includes the constitutional unit A and a constitutional unit B as essential constitutional units, the constitutional unit B having the property of controlling and aligning the liquid crystal molecules which is developed without irradiation with light, and the concentration of the side chain based on the molecular structural formula is calculated based on a repeating unit including the constitutional unit A.

In the first and second liquid crystal display devices according to the present invention, preferably, the first constitutional material includes a first constitutional unit as an essential constitutional unit, the first constitutional unit having the property of controlling and aligning the liquid crystal molecules which is developed by irradiation with light, or includes the first constitutional unit and a second constitutional unit as essential constitutional units, the second constitutional unit having the property of controlling and aligning the liquid crystal molecules which is developed without irradiation with light, and the concentration of the side chain based on the molecular structural formula is calculated based on a repeating unit including the first constitutional unit.

In the first and second liquid crystal display devices according to the present invention, preferably, the first constitutional material includes the first constitutional unit and the second constitutional unit as essential constitutional units, and a proportion of a monomer component of the first constitutional unit to a total of the monomer component of the first constitutional unit and a monomer component of the second constitutional unit is not less than 60% by weight.

In the first and second liquid crystal display devices according to the present invention, preferably, the alignment layer controls and uniformly aligns the liquid crystal molecules.

In the first and second liquid crystal display devices according to the present invention, the alignment layer preferably controls and aligns the liquid crystal molecules such that the average pretilt angle in the liquid crystal layer is not less than 87°.

In the first and second liquid crystal display devices according to the present invention, preferably, the alignment layer controls and aligns the liquid crystal molecules such that the average pretilt angle in the liquid crystal layer is not more than 89.5°.

The liquid crystal molecules are preferably uniformly aligned on the alignment layer.

- Advantageous Effects of Invention

The present invention can realize a liquid crystal display device in which a good alignment state can be obtained, and the occurrence of the AC image sticking can be suppressed.

BRIEF DESCRIPTION OF DRAWINGS

[Fig. 1] Fig. 1 is a perspective schematic view of an alignment layer in a liquid crystal display device according to Embodiment 1.

[Fig. 2] Fig. 2(a) is a cross-sectional schematic view showing a configuration of the liquid crystal display device according to Embodiment 1, and Fig. 2(b) is a cross-sectional schematic view showing another configuration of the liquid crystal display device according to Embodiment 1.

[Fig. 3] Fig. 3 shows a basic structure of a first constitutional material for a liquid crystal alignment agent in Embodiment 1. In Fig. 3, a portion surrounded by a solid line designates a unit derived from acid anhydride (acid anhydride unit), and a portion surrounded by a dashed line designates a unit derived from diamine (diamine unit).

[Fig. 4] Fig. 4 shows another basic structure of the first constitutional material for the liquid crystal alignment agent in Embodiment 1. In Fig. 4, a portion surrounded by a solid line designates a unit derived from acid anhydride (acid anhydride unit), a portion surrounded by a dashed line designates a unit derived from diamine (diamine unit), and a portion surrounded by a dash-dotted line designates a unit derived from diamine having a side chain 22 having

no photofunctional group (non-photo-alignable diamine unit).

[Fig. 5] Fig. 5 is a perspective schematic view showing the surface of the alignment layer in Embodiment 1.

[Fig. 6] Fig. 6 is a perspective schematic view showing the relationship between the direction of the photo-aligning treatment and the pretilt direction of a liquid crystal molecule in Embodiment 1.

[Fig. 7] Fig. 7(a) is a schematic plan view showing a direction of a liquid crystal director and a direction of a photo-aligning treatment in a pair of substrates (upper and lower substrates) within one pixel (or one subpixel) in the case where the liquid crystal display device according to Embodiment 1 has a mono domain, and Fig. 7(b) is a schematic view showing a direction of an absorption axis of a polarizer provided in the liquid crystal display device shown in Fig. 7(a). Fig. 7(a) shows a state where the direction of the photo-aligning treatment intersects orthogonally to the pair of substrates therebetween, and an AC voltage of not less than a threshold value is applied between the pair of substrates. In Fig. 7(a), an arrow of a solid line designates a direction of irradiation of the lower substrate with light (the direction of the photo-aligning treatment), and an arrow of a dotted line designates a direction of irradiation of the upper substrate with light (the direction of the photo-aligning treatment).

[Fig. 8] Fig. 8(a) is a schematic plan view showing the direction of the liquid crystal director and the direction of the photo-aligning treatment in the pair of substrates (upper and lower substrates) within one pixel (or one subpixel) in the case where the liquid crystal display device according to Embodiment 1 has a mono domain, and Fig. 8(b) is a schematic view showing a direction of an absorption axis of a polarizer provided in the liquid crystal display device shown in Fig. 8(a). Fig. 8(a) shows a state where the direction of the photo-aligning treatment is in antiparallel between the pair of substrates, and an AC voltage of not less than a threshold value is applied between the pair of substrates. In Fig. 8(a), an arrow of a solid line designates a direction of irradiation of the lower substrate with light (the direction of the photo-aligning treatment), and an arrow of a dotted line designates a direction of irradiation of the upper substrate with light (the direction of the photo-aligning treatment).

[Fig. 9] Fig. 9 is a cross-sectional schematic view showing a first disposition relationship between substrates and a photomask in a photo-aligning treatment process in Embodiment 1 for performing domain division by a proximity exposure method using an alignment mask.

[Fig. 10] Fig. 10 is a cross-sectional schematic view showing a second disposition relationship between substrates and a photomask in a photo-aligning treatment process in Embodiment 1 for performing domain division by a proximity exposure method using an Alignment mask.

[Fig. 11] Fig. 11(a) is a schematic plan view showing an average direction of the liquid crystal director and the direction of the photo-aligning treatment in the pair of substrates (upper and lower substrates) within one pixel (or one subpixel) and a division pattern of the domain in the case where the liquid crystal display device according to Embodiment 1 has four domains, and Fig. 11(b) is a schematic view showing a direction of an absorption axis of a polarizer provided in the liquid crystal display device shown in Fig. 11(a). Fig. 11(a) shows a state where an AC voltage of not less than a threshold value is applied between the pair of substrates. In Fig. 11(a), an arrow of a solid line designates a direction of irradiation of the lower substrate (driving element substrate) with light (the direction of the photo-aligning treatment), and an arrow of a dotted line designates a direction of irradiation of the upper substrate (color filter substrate) with light (the direction of the photo-aligning treatment).

[Fig. 12] Fig. 12(a) is a schematic plan view showing an average direction of the liquid crystal director and the direction of the photo-aligning treatment in the pair of substrates (upper and lower substrates) within one pixel (or one subpixel) and a division patter of the domain in the case where the liquid crystal display device according to Embodiment 1 has another four domains, Fig. 12(b) is a schematic view showing a direction of an absorption axis of a polarizer provided in the liquid crystal display device shown in Fig. 12(a), and Fig. 12(c) is a cross-sectional schematic view taken along a line A-B in Fig. 12(a) when an AC voltage of not less than a threshold value is applied between the pair of substrates, which shows the alignment direction of the liquid crystal molecule. In Fig. 12(a), an arrow of a dotted line designates a direction of irradiation of the lower substrate (driving element substrate) with light (the direction of the photo-aligning treatment), and an arrow of a solid line designates a direction of irradiation of the upper substrate (color filter substrate) with light (the direction of the photo-aligning treatment). In Fig. 12(c), a dotted line designates a boundary between the domains.

[Fig. 13] Fig. 13 is a schematic plan view showing a transparent electrode in evaluation cell (liquid crystal display device) used in an AC image sticking evaluation test.

[Fig. 14] Fig. 14 is a schematic plan view showing a display state when the evaluation cell (liquid crystal display device) for the AC image sticking evaluation test is electrically conducted.

[Fig. 15] Fig. 15 is a schematic plan view showing a display state of the evaluation cell (liquid crystal display device) during the AC image sticking evaluation test.

[Fig. 16] Fig. 16 is a schematic side view showing a disposition relationship between the evaluation cell (liquid crystal display device) and an ND filter in the AC image sticking evaluation test.

[Fig. 17] Figs. 17(a) to 17(e) are schematic views showing the surface of the alignment layer, which are for describing the relationship among the side chain provided on the surface of the alignment layer, alignment control, and the AC

image sticking.

DESCRIPTION OF EMBODIMENTS

Herein, the VATN mode may be the so-called RTN (Reverse Twisted Nematic; Vertical Alignment TN) mode.

Herein, the ECB mode may be a type in which alignment is vertical when no voltage is applied, and alignment is horizontal when a voltage is applied (VAECB), or may be a type in which alignment is horizontal when no voltage is applied, and alignment is vertical when a voltage is applied.

Herein, the photofunctional group is not particularly limited as long as it is a functional group that develops a property of controlling and aligning the liquid crystal molecules by irradiation with light. Preferably, the photofunctional group is a group that undergoes at least one of a crosslinking reaction (including a dimerization reaction), a degradation reaction, an isomerization reaction, and photo-realignment, and more preferably at least one of a crosslinking reaction (including a dimerization reaction), an isomerization reaction, and photo-realignment by irradiation with light, preferably with UV light, and more preferably with polarized ultraviolet light.

Herein, in uniform alignment control, precisely uniform alignment control is unnecessary, and the alignment may be uniform at a degree in which a single liquid crystal mode can be implemented.

Herein, in vertical alignment control of the liquid crystal molecules, the liquid crystal molecules do not need to be controlled to align in a direction precisely vertical to the surface of the alignment layer, and the liquid crystal molecules may be controlled to align in a direction vertical to the surface of the alignment layer at a degree in which a vertical alignment mode such as the VATN mode can be implemented.

Herein, in the alignment control directions in the same direction, the alignment control directions do not need to be precisely the same, and may be the same direction at a degree in which a single liquid crystal mode can be implemented.

Herein, the average pretilt angle in the liquid crystal layer means an angle made by a direction of an average profile (director) of the liquid crystal molecule in the perpendicular direction of the liquid crystal layer (polar angle direction) and the surface of the substrate in the state where no voltage is applied between the pair of substrates (liquid crystal layer). An apparatus for measuring the average pretilt angle in the liquid crystal layer is not particularly limited, and examples thereof include a commercially available tilt angle measurement apparatus (made by SHINTEC, Inc., trade name: OPTIPRO). In the tilt angle measurement apparatus, the surface of the substrate is 0°, the direction vertical to the surface of the substrate is 90°, and the pretilt angle is defined as the average profile of the liquid crystal molecule in the perpendicular direction of the liquid crystal layer. Accordingly, the tilt angle measurement apparatus is suitable for an apparatus for measuring the average pretilt angle in the liquid crystal layer. The factor to determine the average pretilt angle in the liquid crystal layer is the profile of the liquid crystal molecule in the vicinity of the alignment layer (interface), and it is thought that the liquid crystal molecules at the interface elastically deform the liquid crystal molecules in a bulk (an intermediate layer) of the liquid crystal layer. The profile of the liquid crystal molecule in the vicinity of the alignment layer (interface) is different from that in the bulk (an intermediate layer) of the liquid crystal layer. Accordingly, it is also thought that in a strict sense, the direction (polar angle direction) of the profile of the liquid crystal molecule at the interface is different from that in the intermediate layer.

The present invention will be mentioned in more detail referring to the drawings in the following embodiments, but is not limited to these embodiments.

Embodiment 1

The liquid crystal display device according to the present embodiment is configured to include a liquid crystal layer containing the liquid crystal molecules interposed between a pair of substrates, and an alignment layer on a side of the liquid crystal layer in at least one of the substrates.

The alignment layer contains a liquid crystal alignment polymer having a property of controlling and aligning the liquid crystal molecules.

The alignment layer is formed by applying a liquid crystal alignment agent to at least one of the substrates, the liquid crystal alignment agent containing a first constitutional material as a material for the liquid crystal alignment polymer.

The surface side chain density represented by the expression above is not less than 2.0.

The concentration of the side chain on the topmost surface is a concentration of the side chain indexing atom on the surface of the alignment layer, and measured using X-ray photoelectron spectroscopy (XPS). XPS can detect all the elements except hydrogen in a shallow portion several nanometers from the surface of a sample. Namely, the ratio of the constitutional element on the surface of the sample can be determined.

The concentration of the side chain based on the molecular structural formula may be a concentration of the side chain indexing atom contained in the repeating unit in the liquid crystal alignment polymer. In this case, the concentration of the side chain based on the molecular structural formula is determined from the structural formula of the

liquid crystal alignment polymer. The side chain indexing atom is an atom contained in the side chain of the liquid crystal alignment polymer but not in the main chain thereof.

Meanwhile, the concentration of the side chain based on the molecular structural formula may be a concentration of the side chain indexing atom contained in the repeating unit in the first constitutional material before the liquid crystal alignment agent is applied. In this case, the concentration of the side chain based on the molecular structural formula is determined from the structural formula of the first constitutional material. The side chain indexing atom is an atom contained in the side chain of the first constitutional material but not in the main chain thereof.

In the case where the structure of the side chain of the first constitutional material is changed by the photo-aligning treatment to make the structure of the side chain of the liquid crystal alignment polymer different from the structure of the side chain of the first constitutional material, for example, in the case where the side chain of the first constitutional material has a photofunctional group that undergoes a crosslinking reaction or a degradation reaction, the concentration of the side chain based on the molecular structural formula is calculated based on the repeating unit including the structure of the side chain of the first constitutional material. Also in this case, however, the structural formula of the repeating unit including the structure of the side chain of the first constitutional material can be presumed from the structural formula of the repeating unit in the liquid crystal alignment polymer, as described later.

Meanwhile, for example, in the case where the side chain of the first constitutional material has no photofunctional group, the structure of the side chain of the first constitutional material is not changed by baking and the aligning treatment, and the side chain of liquid crystal alignment polymer has the same structure as that of the side chain of the first constitutional material. The concentration of the side chain based on the molecular structural formula may be calculated based on the repeating unit in the liquid crystal alignment polymer, or may be calculated based on the repeating unit in the first constitutional material before the liquid crystal alignment agent is applied.

As shown in Fig. 5, a side chain indexing atom 30 exists only in the side chain 21 of an alignment layer 10. Thus, the concentration of the side chain on the topmost surface is the concentration of the side chain indexing atom contained in the side chain provided on the surface of the alignment layer among the side chains contained in the alignment layer. Accordingly, it means that as the value of the concentration of the side chain on the topmost surface is larger, the amount of the side chain indexing atom provided on the surface of the alignment layer is larger. The side chain indexing atom is not particularly limited, and examples thereof include halogen atoms such as fluorine.

The concentration of the side chain based on the molecular structural formula will be further described. For example, in the case where the molecular formula of the repeating unit in the first constitutional material is $C_xH_yN_zO_mF_n$ and a fluorine atom is the side chain indexing atom, the concentration of the side chain based on the molecular structural formula is calculated from the expression $n/(x + z + m + n) \times 100$. The hydrogen atom cannot be detected by the XPS, and the number of the hydrogen atom is not considered in the concentration of the side chain based on the molecular structural formula.

The structural formula of the liquid crystal alignment polymer and that of the first constitutional material can be determined using GC-MS (gas chromatograph mass spectrometry), LC-MS (liquid chromatograph mass spectrometry), FT-IR (Fourier transform infrared spectrophotometry), NMR (nuclear magnetic resonance spectroscopy), and the like.

When the structural formula of the liquid crystal alignment polymer is determined, the alignment layer is scraped off in flakes, and the flakes are dissolved in a solvent. Then, the measurement above is performed.

The structural formula of the first constitutional material can also be determined from the structural formula of the liquid crystal alignment polymer. Conversely, the structural formula of the liquid crystal alignment polymer can be determined from the structural formula of the first constitutional material. Hereinafter, specific determination of the structural formula will be described as follows: (1) the case where the structural formula of the liquid crystal alignment polymer is the same as that of the side chain of the first constitutional material, and (2) the case where the liquid crystal alignment polymer has a side chain having a structure different from that of the side chain of the first constitutional material.

(1) The case where the structural formula of the liquid crystal alignment polymer is the same as that of the side chain of the first constitutional material

In the case where the side chain of the first constitutional material has no photofunctional group, or the side chain of the first constitutional material has a photofunctional group that undergoes a photoisomerization reaction and/or photo-realignment, the structural formula of the side chain of the first constitutional material is not changed even after the baking step and the aligning treatment step. The structural formula of the main chain of the first constitutional material is not changed, or even if changed, can be presumed easily from the structural formula after the reaction as imidization. Accordingly, in such a case, the structural formula of the first constitutional material is the structural formula of the liquid crystal alignment polymer as it is, or can be presumed from the structural formula of the liquid crystal alignment polymer.

(2) The case where the liquid crystal alignment polymer has a side chain having a structure different from that of the side chain of the first constitutional material

In the case where the side chain of the first constitutional material has a photofunctional group that undergoes a crosslinking reaction or a degradation reaction, the structure of the side chain of the first constitutional material is usually changed in the aligning treatment step. For example, in the case where the side chain of the first constitutional material has a photofunctional group that undergoes a dimerization reaction that is a kind of the crosslinking reaction, the C=C bond of the photofunctional group is cleaved to form a 4-membered ring as shown in the formula below. From the 4-membered ring and the structure therearound, however, the photofunctional group before the dimerization reaction can be identified, and the structural formula of the side chain of the first constitutional material can be determined. In the case where not all the structures of the repeating units of the first constitutional material are changed, the remaining photofunctional group without undergoing the crosslinking reaction (dimerization reaction) by the aligning treatment can be identified to determine the structural formula of the side chain of the first constitutional material.

[Chem. 1]

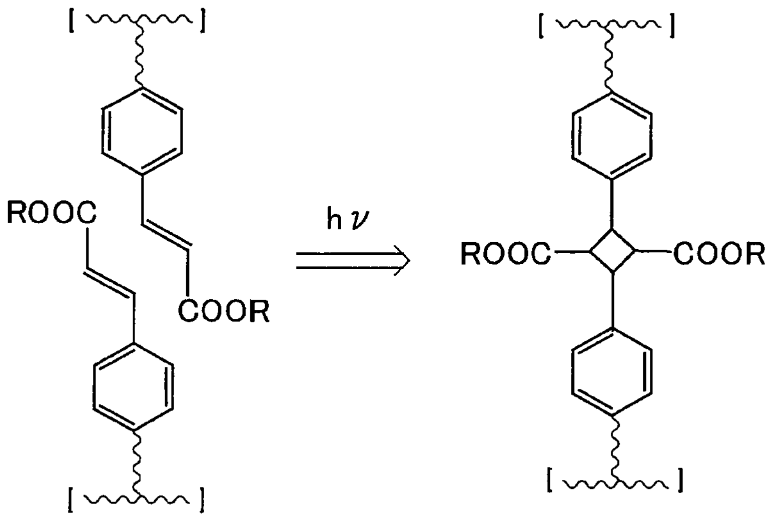


Moreover, the case where the side chain of the first constitutional material has a photofunctional group that undergoes a degradation reaction will be described. The amount of the ultraviolet light for irradiation needed for the degradation reaction is enormous and usually several J/cm$^2$ or more. Accordingly, there are few cases where all the side chains in the first constitutional material are decomposed, and all the structures of the repeating units of the first constitutional material are changed. Accordingly, the remaining photofunctional group without undergoing the degradation reaction by the aligning treatment can be identified, and thereby the structural formula of the side chain of the first constitutional material can be determined.

The structural formula of the main chain of the first constitutional material is not changed, or can be easily presumed from the structural formula after the reaction, as described above. Accordingly, also in the case where the liquid crystal alignment polymer has a side chain having a structure different from that of the side chain of the first constitutional material, the structural formula of the first constitutional material can be presumed from the structural formula of the liquid crystal alignment polymer. In the same manner, the structural formula of the repeating unit including the structure of the side chain of the first constitutional material can also be presumed from the structural formula of the repeating unit in the liquid crystal alignment polymer.

As above, the structural formula of the side chain of the liquid crystal alignment polymer may be the same as or different from the structural formula of the side chain of the first constitutional material.

In the case where the first constitutional material has a photofunctional group that undergoes at least one of the crosslinking reaction, the isomerization reaction, and photo-realignment, higher electrical properties of the alignment layer can be obtained than in the case where the first constitutional material has a photofunctional group that undergoes the degradation reaction. Accordingly, from such a viewpoint, the photofunctional group preferably undergoes at least one of the photocrosslinking reaction (including the dimerization reaction), the photoisomerization reaction, and photo-realignment. From the viewpoint of easy determination of the structural formulas of the liquid crystal alignment polymer and the first constitutional material as above, the photofunctional group more preferably undergoes at least one of the

photoisomerization reaction and photo-realignment.

Here, using Fig. 1, the side chain provided on the surface of the alignment layer will be described.

The alignment layer in the present embodiment is formed by applying the liquid crystal alignment agent containing the first constitutional material. Among the side chains of the first constitutional material, as shown in Fig. 1, the properties of the alignment layer 10 are greatly influenced by the side chain 21 provided on the surface on the side of the liquid crystal layer in the alignment layer 10 in the present embodiment as describe above.

The concentration of the side chain on the topmost surface is considered as one of the parameters for evaluating the side chain provided on the surface of the alignment layer. Only adjustment of the concentration of the side chain on the topmost surface is insufficient, however. Hereinafter, the reason will be described using Fig. 17.

For example, in Fig. 17(a), the concentration of the side chain on the topmost surface is $2n \times 5 = 10n$ wherein the number of the side chain indexing atom contained in one side chain 21a is 2n, and the number of the side chain 21a is 5. Meanwhile, in Fig. 17(b), the concentration of the side chain on the topmost surface is $2n \times 2 = 4n$ wherein the number of the side chain indexing atom contained in one side chain 21a is 2n as above, and the number of the side chain 21a is 2. Namely, the alignment layer in Fig. 17(b) has a smaller value of the concentration of the side chain on the topmost surface than the alignment layer in Fig. 17(a). For this reason, it can be instinctively understood that the alignment regulating force is weaker. However, in the case where the number of the side chain indexing atom contained in the side chain 21a in Fig. 17(b) is five times the number of the side chain 21a in Fig. 17(a), namely 5n, the concentration of the side chain on the topmost surface in Fig. 17(b) is $5n \times 2 = 10n$. Thus, even if the concentration of the side chain on the topmost surface is the same, the number of the side chain 21a in Fig. 17(a) is different from that in Fig. 17(b), resulting in a difference in the alignment regulating force. Namely, that the side chain having many side chain indexing atoms sparsely exists on the surface of the alignment layer is significantly different from that the side chain having a little side chain indexing atoms densely exists on the surface of the alignment layer. Thus, the concentration of the side chain on the topmost surface is one of important factors to improve the alignment regulating force, but use of only the concentration thereof is insufficient in improving the alignment regulating force.

Then, in the present embodiment, a value obtained by dividing the concentration of the side chain on the topmost surface by the concentration of the side chain based on the molecular structural formula, namely, the surface side chain density is used. Thereby, the influence given by the amount of the side chain indexing atom contained in one side chain can be reduced. Namely, irrespective of the amount of the side chain indexing atom contained in one side chain, the side chain provided on the surface of the alignment layer can be increased by increasing the surface side chain density. In the present embodiment, if the surface side chain density is not less than 2.0, a good alignment state can be obtained, and the occurrence of the AC image sticking can be suppressed.

Preferably, the concentration of the side chain on the topmost surface is not less than 2.1. At a concentration less than 2.1, it may be difficult to obtain uniform alignment.

The upper limit of the concentration of the side chain on the topmost surface is not particularly limited, but it is preferably not more than 4.5, more preferably not more than 4.2, and still more preferably not more than 4.

The surface side chain density is logically 1, but actually not 1.

As above, as one feature of the present embodiment, the surface side chain density is not less than 2.0. In order to efficiently provide a surface side chain density of not less than 2.0, preferably, use of a variety of methods below promotes the side chain of the first constitutional material appearing on the surface of the alignment layer.

First, preferably, the molecule of the first constitutional material is designed so as to promote appearance of the side chain of the first constitutional material on the surface of the alignment layer. For example, in the case where the alignment layer in the present embodiment is a vertical alignment layer, the first constitutional material usually has a hydrophobic group and a hydrophilic group, and therefore has both properties of hydrophobicity and hydrophilicity (amphiphilicity). In this case, preferably, the hydrophobic group is provided on a side contacting the liquid crystal layer, and the hydrophilic group is provided on a side of the substrate. Accordingly, in the case where the alignment layer in the present embodiment is the vertical alignment layer, use of a first constitutional material demonstrating higher hydrophobicity promotes the side chain of the first constitutional material appearing on the surface of the alignment layer. Similarly in the case where not only the first constitutional material, but also a constitutional material having no property of controlling and aligning the liquid crystal molecules (hereinafter, also referred to as a second constitutional material) is used, use of a first constitutional material demonstrating higher hydrophobicity promotes the side chain of the first constitutional material appearing on the surface of the alignment layer even if the second constitutional material exists. Thus, from the viewpoint of improvement in the hydrophobicity of the first constitutional material, the first constitutional material preferably has a long-chain alkyl group or a cholestric structure, for example.

Preferably, a first constitutional material having more flexibility is used. This also promotes the side chain of the first constitutional material appearing on the surface of the alignment layer. Namely, if the first constitutional material has a rigid molecule structure, the side chain of the first constitutional material may be difficult to appear on the surface of the alignment layer. This can be avoided by using a first constitutional material having high freedom of bending or stretching of the molecule and having flexibility. Thus, from the viewpoint of improvement in the flexibility of the first

constitutional material, the first constitutional material preferably includes a single bond, for example.

Further, in the case where the alignment layer in the present embodiment is the vertical alignment layer, preferably, the hydrophobic group of the first constitutional material is controlled to appear on a side of an air layer but not on the side of the substrate when the liquid crystal alignment agent is applied to form the alignment layer. This also promotes the side chain of the first constitutional material appearing on the surface of the alignment layer. Examples of a specific control method include performing a hydrophilic treatment on a surface of the substrate to which the liquid crystal alignment agent is applied, and control of the humidity in an atmosphere for forming the alignment layer to be 40 to 60%.

Hereinafter, the liquid crystal display device according to the present embodiment will be described in detail.

The liquid crystal display device according to the present embodiment may be simply driven, but is preferably actively driven.

From the viewpoint of improvement in display quality and responsiveness, the alignment layer is preferably provided on both of the substrates.

The alignment layer may be a horizontal alignment layer, but is preferably the vertical alignment layer. Preferably, the liquid crystal molecules are controlled to vertically align. The surface side chain density of the vertical alignment layer influences the display quality more sensitively than that of the horizontal alignment layer. For this reason, according to the embodiment, the effect of the present invention can be attained more efficiently. Moreover, the liquid crystal display device according to the present embodiment can be efficiently driven in the vertical alignment mode such as the VATN mode.

The alignment layer may be subjected to the aligning treatment, or not subjected to the aligning treatment. In the case where the alignment layer is subjected to the aligning treatment, the alignment layer may be subjected to a treatment to actively rub the surface thereof, namely, an aligning treatment by rubbing. Preferably, the alignment layer is subjected to an aligning treatment by irradiation with light. Namely, the alignment layer is preferably a photo-alignment layer. The surface side chain density influences the display quality more sensitively in the case of using the photo-alignment method than in the case of using the rubbing method. Accordingly, according to the embodiment, the effect of the present invention can be attained more efficiently. Additionally, merits in the production process by the photo-alignment method can be obtained. Further, application properties of the liquid crystal alignment agent can be improved.

Examples of the merits of the photo-alignment method include suppression of dirt and wastes during the aligning treatment by performing the aligning treatment in a noncontacting manner, suppression of display defects in a mechanical aligning treatment such as the rubbing method (for example, rubbing scratch), and easy domain division of a pixel into desired domains by exposing the alignment layer using a photomask having a transparent portion with a desired pattern.

Thus, preferably, the alignment layer is obtained by applying the liquid crystal alignment agent to form a layer and performing the aligning treatment on the layer by irradiation with light, and the first constitutional material develops the property of controlling and aligning the liquid crystal molecules by the irradiation with light.

At this time, the layer (layer before the aligning treatment by irradiation with light is performed) is preferably sensitive to the light, and reacts to the light with small exposure energy for a short time. The light is suitably ultraviolet light, and more suitably polarized ultraviolet light.

The liquid crystal alignment polymer may be an inorganic substance, but is preferably an organic substance. Similarly, the first constitutional material may be an inorganic material, but is preferably an organic material.

The molecular weight of the liquid crystal alignment polymer and that of the first constitutional material are not particularly limited. Preferably, the liquid crystal alignment polymer and the first constitutional material have a molecular weight such that these can be used as the constitutional material for the alignment layer, similarly in the case of the polymer contained in the alignment layer in the related art or the polymer contained in the liquid crystal alignment agent in the related art.

The alignment layer may not contain a non-alignable substance having no property of controlling and aligning the liquid crystal molecules. Thus, the alignment layer may contain only the liquid crystal alignment polymer. Thereby, the liquid crystal alignment polymer always appears on the surface of the alignment layer, and the liquid crystal molecules can be more efficiently controlled to align.

Similarly, the liquid crystal alignment agent may not contain the constitutional material having no property of controlling and aligning the liquid crystal molecules, namely, the second constitutional material. Thus, the liquid crystal alignment agent may contain only the first constitutional material as the constitutional material for the alignment layer. Thereby, the first constitutional material always appears on the surface of the alignment layer, and the liquid crystal molecules can be more efficiently controlled to align.

The alignment layer may contain a non-alignable substance (preferably a polymer, and more preferably an organic polymer) having no property of controlling and aligning the liquid crystal molecules. Thereby, good reliability can be demonstrated irrespective of the baking temperature. Additionally, a liquid crystal display device having display properties such that the DC image sticking and the AC image sticking are difficult to occur can be obtained.

From the same viewpoint, the liquid crystal alignment agent may contain the first constitutional material and

the second constitutional material (preferably a polymer, and more preferably an organic polymer) having no property of controlling and aligning the liquid crystal molecules.

Thus, the non-alignable substance and the second constitutional material are introduced to improve electrical properties of the liquid crystal display device. Namely, the non-alignable substance and the second constitutional material are used to suppress the image sticking (DC image sticking) caused by accumulation of charges in the liquid crystal display device.

The alignment layer may have a stack structure including an upper layer containing the liquid crystal alignment polymer (a layer on the side of the liquid crystal layer) and a lower layer containing the non-alignable substance (a layer on the side of the substrate). Thereby, the alignment properties and electrical properties of the alignment layer can also be demonstrated more efficiently.

From the same viewpoint, the alignment layer may have a stack structure including an upper layer formed using the first constitutional material and a lower layer formed using the second constitutional material.

From the same viewpoint, after the liquid crystal alignment agent is applied onto at least one of the substrates, the first constitutional material preferably appears on the surface of the at least one of the substrates.

The ratio of the first constitutional material to the second constitutional material can be properly set, but is preferably larger. Specifically, the proportion of the first constitutional material to the total of the first constitutional material and the second constitutional material is preferably not less than 10% by weight (more suitably not less than 12% by weight).

In the case where the non-alignable substance and the second constitutional material are polymers, the molecular weights thereof are not particularly limited. Preferably, these polymers have molecular weights such that these can be used as the constitutional material for the alignment layer, similarly in the case of the polymer contained in the alignment layer in the related art or the polymer contained in the liquid crystal alignment agent in the related art.

Preferably, the liquid crystal alignment polymer and the non-alignable substance each are a polyimide (may be a partial polyimide).

At this time, the concentration of the side chain based on the molecular structural formula is calculated from the repeating unit including the main chain structure of a polyamic acid when the imidizing rate of the polyimide is less than 100%, and is calculated from the repeating unit including the main chain structure of a polyamic acid supposing that the polyimide is a polyamic acid not imidized when the imidizing rate of the polyimide is 100%.

Similarly, the first and second constitutional materials each are preferably a polyamic acid (a polyimide precursor) or a polyimide (may be a partial polyimide).

At this time, the concentration of the side chain based on the molecular structural formula is calculated from the repeating unit of the polyamic acid when the first constitutional material is the polyamic acid, calculated from the repeating unit including the main chain structure of the polyamic acid when the first constitutional material is a polyimide and the imidizing rate of the polyimide is less than 100%, and calculated from the repeating unit including main chain structure of the polyamic acid supposing that the polyimide is a polyamic acid not imidized when the imidizing rate of the polyimide is 100%.

When the first constitutional material is the polyimide, the imidizing rate is preferably small, and specifically preferably not more than 80% (more suitably not more than 75%).

When the second constitutional material is the polyimide, the imidizing rate is not particularly limited, and is properly set.

Preferably, the liquid crystal alignment polymer and the first constitutional material have a photofunctional group in order to develop the property of controlling and aligning the liquid crystal molecules by irradiation with the light. Thus, preferably, the side chains of the liquid crystal alignment polymer and the first constitutional material each have a photofunctional group. Thereby, the photo-alignment layer can be attained more easily, and the effect of the present invention can be attained more efficiently.

As essential constitutional units, the liquid crystal alignment polymer may contain a constitutional unit A in which the property of controlling and aligning the liquid crystal molecules is developed by irradiation with the light and a constitutional unit B in which the property of controlling and aligning the liquid crystal molecules is developed without irradiation with the light. Thereby, the occurrence of the AC image sticking can be further suppressed, attaining higher display quality.

In the case where the liquid crystal alignment polymer includes a constitutional unit other than the constitutional unit A as above, the concentration of the side chain based on the molecular structural formula is calculated from the molecular structural formula of the repeating unit including the constitutional unit A, and the molecular structural formula of the repeating unit including the constitutional unit other than the constitutional unit A is not considered.

Meanwhile, the liquid crystal alignment polymer may contain only the constitutional unit A as the essential constitutional unit, and may not contain a constitutional unit other than the constitutional unit A, e.g., the constitutional unit B.

Similarly, as the essential constitutional units, the first constitutional material may contain a first constitutional

unit that develops the property of controlling and aligning the liquid crystal molecules by irradiation with the light and a second constitutional unit that develops the property of controlling and aligning the liquid crystal molecules without irradiation with the light. Thereby, the occurrence of the AC image sticking can be further suppressed, attaining higher display quality.

In the case where the first constitutional material includes a constitutional unit other than the first constitutional unit as above, the concentration of the side chain based on the molecular structural formula is calculated from the molecular structural formula of the repeating unit including the first constitutional unit, and the molecular structural formula of the repeating unit including the constitutional unit other than the first constitutional unit is not considered.

Meanwhile, the first constitutional material may contain only the first constitutional unit as the essential constitutional unit, and may not contain a constitutional unit other than the first constitutional unit, e.g., the second constitutional unit.

The constitutional unit derived from the first constitutional unit is the constitutional unit A, and the constitutional unit derived from the second constitutional unit is the constitutional unit B. Namely, the first constitutional unit finally becomes the constitutional unit A, and the second constitutional unit finally becomes the constitutional unit B.

In the case where the first constitutional material contains the first and second constitutional units, the proportion of the first constitutional unit to the total of the first and second constitutional units contained in the first constitutional material is preferably larger. Specifically, the proportion of a material for the first constitutional unit to the total of a material for the first constitutional unit (monomer of the first constitutional unit) and a material for the second constitutional unit (monomer of the second constitutional unit) contained in the first constitutional material is preferably not less than 60% by weight (more suitably not less than 80% by weight).

Distribution of the constitutional unit A and the constitutional unit other than the constitutional unit A is not particularly limited, and may be any of an alternating copolymer, a block copolymer, a random copolymer, and a graft copolymer.

Similarly, distribution of the first constitutional unit and the constitutional unit other than the first constitutional unit is not particularly limited, and may be any of an alternating copolymer, a block copolymer, a random copolymer, and a graft copolymer.

The constitutional unit A preferably has a photofunctional group, and more preferably has a side chain having a photofunctional group. Thereby, the photo-alignment layer can be attained more easily, and the AC image sticking can be reduced more effectively.

From the same viewpoint, the first constitutional unit preferably has a photofunctional group, and more preferably has a side chain having a photofunctional group.

The constitutional unit B preferably has an alignable functional group, and more preferably has a side chain having an alignable functional group. Thereby, the photo-alignment layer can be attained more easily, and the AC image sticking can be reduced more effectively.

From the same viewpoint, the second constitutional unit preferably has an alignable functional group, and more preferably has a side chain having an alignable functional group.

The alignable functional group is not particularly limited as long as it is a functional group that develops the property of controlling and aligning the liquid crystal molecules without irradiation with light. A known alignable functional group in the related art such as a vertical alignable functional group and a horizontal alignable functional group can be used.

The vertical alignable functional group is not particularly limited as long as it is a functional group that develops the property of controlling vertical alignment of the liquid crystal molecules. Preferably, the vertical alignable functional group is a functional group that develops the property of controlling vertical alignment of the liquid crystal molecules without a treatment or by the rubbing treatment, and more suitably without a treatment, namely, without performing the aligning treatment.

The horizontal alignable functional group is not particularly limited as long as it is a functional group that develops the property of controlling horizontal alignment of the liquid crystal molecules. Preferably, the horizontal alignable functional group is a functional group that develops the property of controlling horizontal alignment of the liquid crystal molecules without a treatment or by the rubbing treatment.

The constitutional unit A and the constitutional unit B preferably have the same alignment control direction. Thereby, the liquid crystal display device according to the present embodiment can be driven in a single liquid crystal mode such as the VATN mode, the TN mode, the ECB mode, and the IPS (In Place Switching) mode effectively.

From the same viewpoint, the first constitutional unit and the second constitutional unit preferably have the same alignment control direction.

From the same viewpoint, the alignment layer preferably controls and uniformly align the liquid crystal molecules within a plane of the alignment layer.

In the case where the liquid crystal display device according to the present embodiment is effectively driven in the vertical alignment mode such as the VATN mode, preferably, the alignment layer controls and aligns the liquid crystal molecules such that the average pretilt angle in the liquid crystal layer is 87 to 89.5°, and more suitably 87.5 to 89°.

Thereby, a VATN mode liquid crystal display device having high viewing angle characteristics, responsiveness, and light transmissivity can be attained.

From the viewpoint of not affecting the contrast in the VATN mode (preventing increase in black brightness), preferably, the alignment layer controls and aligns the liquid crystal molecules such that the average pretilt angle in the liquid crystal layer is not less than 87°, and more suitably not less than 87.5°.

Meanwhile, preferably, the alignment layer controls and aligns the liquid crystal molecules such that the average pretilt angle in the liquid crystal layer is not more than 89.5°, and more suitably not more than 89° from the viewpoint of suppressing a persisting image caused by pressing the display surface, or the so-called pressing persisting image, and controlling an extinction position to fall within ± 5° when the absorption axis of a cross-Nicol polarizer is rotated by 45° and a voltage of 7.5 V is applied to the liquid crystal layer.

In the case where the liquid crystal display device according to the present embodiment is effectively driven in the vertical alignment mode such as the VATN mode, preferably, the constitutional unit B and the second constitutional unit each have a side chain having a vertical alignable functional group. Thereby, a liquid crystal display device in the vertical alignment mode such as the VATN mode can be easily attained.

Forms (a) to (f) are preferable from the viewpoint of effectively driving the liquid crystal display device according to the present embodiment in the VATN mode, stabilizing the average pretilt angle in the liquid crystal layer to be a range suitable for the VATN mode of 87 to 89.5°, and further suppressing the AC image sticking.

(a) The side chain of the liquid crystal alignment polymer and the side chain of the first constitutional material each may have at least one photofunctional group selected from the group consisting of a coumarin group, a cinnamate group, a chalcone group, an azobenzene group, and a stilbene group. Similarly, the constitutional unit A and the first constitutional unit each may have a side chain having at least one photofunctional group selected from the group consisting of a coumarin group, a cinnamate group, a chalcone group, an azobenzene group, and a stilbene group. Thereby, electrical properties of the alignment layer are relatively higher than those in the alignment layer formed using a decomposable material.

(b) The side chain of the liquid crystal alignment polymer and the side chain of the first constitutional material each may have a steroid skeleton. Similarly, the constitutional unit B and the second constitutional unit each may have a side chain having a steroid skeleton.

(c) The side chain of the liquid crystal alignment polymer and the side chain of the first constitutional material each may have a structure in which three or four rings are linearly bonded, the three or four rings each independently may be selected from the group consisting of 1,4-cyclohexylene and 1,4-phenylene, and bonds between the three or four rings each independently may be a single bond or 1,2-ethylene. Similarly, the constitutional unit B and the second constitutional unit each may have a side chain having a structure in which three or four rings are linearly bonded, the three or four rings each independently may be selected from the group consisting of 1,4-cyclohexylene and 1,4-phenylene, and bonds between the three or four rings each independently may be a single bond or 1,2-ethylene.

(c') The side chain of the liquid crystal alignment polymer and the side chain of the first constitutional material each may have a structure in which three or four rings are linearly bonded, two rings on the terminal side in the three or four rings may be 1,4-phenylene, one or two rings on the main chain side in the three or four rings each independently may be selected from the group consisting of 1,4-cyclohexylene and 1,4-phenylene, and bonds between the three or four rings may be a single bond. Similarly, the constitutional unit B and the second constitutional unit each may have a side chain having a structure in which three or four rings are linearly bonded, two rings on the terminal side in the three or four rings may be 1,4-phenylene, one or two rings on the main chain side in the three or four rings each independently may be selected from the group consisting of 1,4-cyclohexylene and 1,4-phenylene, and bonds between the three or four rings may be a single bond.

(d) The liquid crystal alignment polymer preferably has at least one main chain structure selected from the group consisting of polyimide, polyamide, and polysiloxane, and more preferably has a main chain structure of polyimide. Similarly, the first constitutional material preferably has at least one main chain structure selected from the group consisting of polyamic acid (polyimide precursor), polyimide, polyamide, and polysiloxane, and more preferably has a main chain structure of polyamic acid and/or polyimide.

(e) The first constitutional material is preferably formed using at least diamine. Similarly, the essential constitutional unit is preferably formed with diamine.

(f) The first constitutional material is preferably a copolymer of a monomer component comprising diamine and at least one of an acid anhydride and a dicarboxylic acid.

The liquid crystal alignment polymer and the first constitutional material each may be a polymer having a main chain structure of polyamidimide. Meanwhile, from the viewpoint of improving the heat resistance and electrical properties of the alignment layer, the liquid crystal alignment polymer more preferably has a main chain structure of polyimide, and the first constitutional material more preferably has a main chain structure of at least one of polyamic acid and polyimide. Namely, more preferably, the liquid crystal alignment polymer and the first constitutional material each are a copolymer of a monomer component comprising diamine and acid anhydride.

From the viewpoint of suppressing the AC image sticking more effectively and providing a larger average pretilt angle in the liquid crystal layer in the VATN mode, the proportion of the monomer component of the constitutional unit B to the monomer component of the constitutional unit A (introduction rate R) is preferably not less than 4% by weight. From the viewpoint of suppressing the AC image sticking more effectively and providing a larger average pretilt angle in the liquid crystal layer in the VATN mode, the introduction rate R is preferably not more than 40% by weight.

From the same viewpoint, the proportion of the monomer component of the second constitutional unit to the monomer component of the first constitutional unit (introduction rate r) is preferably not less than 4% by weight. From the same viewpoint, the introduction rate r is preferably not more than 40% by weight.

Preferably, the alignment layer is a photo-alignment layer; the liquid crystal display device has a plurality of pixels arranged in a matrix form; each of the pixels includes a plurality of pixel electrodes arranged in a matrix form on the side of the liquid crystal layer in one of the substrates, and has two or more domains adjacent to each other. In such a configuration, the boundary between adjacent domains is often doubly exposed, and the AC image sticking tends to be increased in the doubly exposed portion (double-exposed portion). In the double-exposed portion, the pretilt angle of the liquid crystal molecule tends to be fluctuated. By using the alignment layer in the present embodiment in this configuration, however, the AC image sticking and fluctuation in the pretilt angle of the liquid crystal molecule can be suppressed effectively in the double-exposed portion. Moreover, the pixel has two or more domains, enabling a wide viewing angle. Thus, in the liquid crystal display device, each of the pixel regions are preferably divided and exposed to provide multi-domains. The VATN mode and the ECB mode are suitable for a liquid crystal mode using domain division.

From the viewpoint of attaining the wide viewing angle in four directions such as top, bottom, right, and left, the liquid crystal display device has preferably four domains within one pixel.

The liquid crystal mode of the liquid crystal display device is not particularly limited. The VATN mode is preferable, and a 4 VATN mode having four domains formed within one pixel is particularly preferable. These modes are preferably formed by a photo-alignment method. Namely, preferably, the liquid crystal molecule has negative dielectric anisotropy; the alignment layer is a photo-alignment layer, aligns the liquid crystal molecules substantially orthogonal to the surface of the alignment layer when no voltage is applied to the liquid crystal layer, and provided in each of the substrates; when the pair of substrates is seen in planar view, in the liquid crystal display device, the alignment direction of the liquid crystal molecule on the surface of the alignment layer provided in one of the substrates intersects orthogonally to the alignment direction of the liquid crystal molecule on the surface of the alignment layer provided in the other of the substrates. At this time, more preferably, the liquid crystal display device has four domains within one pixel. In the VA mode using the rubbing method or a mode in which the alignment is determined depending on a structure such as protrusions and an electrode structure, the liquid crystal molecules unevenly align on the alignment layer due to scratches produced on the surface of the alignment layer by rubbing or existence of the structure, resulting in a light leakage phenomenon. Contrary to this, in the VATN or 4 VATN mode using the photo-alignment method, the liquid crystal molecules uniformly align on the alignment layer. Accordingly, the AC image sticking can be remarkably observed in the VATN or 4 VATN mode using the photo-alignment method. Accordingly, by using the alignment layer in the present embodiment for a mode in which the liquid crystal molecules uniformly align on the alignment layer, particularly in the VATN or 4 VATN mode using the photo-alignment method, the effect of suppressing the AC image sticking can be obtained more remarkably than in the case where the alignment layer in the present embodiment is used for a mode in which the liquid crystal molecules unevenly align on the alignment layer.

The various forms described above may be properly used in combination.

Hereinafter, in the present embodiment, the followings will be described in order: 1. an example of a configuration of the liquid crystal display device, 2. the liquid crystal alignment agent, 3. a method for producing an alignment layer, 4. basic operation of the liquid crystal display device, 5. a method for measuring the concentration of the side chain on the topmost surface using XPS, 6. the evaluation test of the alignment state, 7. measurement of the average pretilt angle, and 8. the AC image sticking evaluation test.

Hereinafter, the VATN mode will be described in detail while the present invention can also be used in the TN mode, IPS mode, and ECB mode of the horizontal alignment type. In the case where the present invention is used in a mode of the horizontal alignment type, for example, a copolymer may be used as the first constitutional material, the copolymer comprising a constitutional unit (such as diamine) having no vertical alignable functional group introduced into the side chain or a constitutional unit (such as diamine) having a hydrophilic functional group or a horizontal alignment functional group introduced into the side chain, and a constitutional unit (such as diamine) having a photofunctional group of a horizontal alignment type.

Hereinafter, the photo-alignment layer will be described, but the alignment layer in the present invention is not limited to the photo-alignment layer.

1. An example of a configuration of the liquid crystal display device

Examples of the configuration of the liquid crystal display device according to the present embodiment include

those shown in Figs. 2(a) and 2(b). Namely, as shown in Figs. 2(a) and 2(b), in the liquid crystal display device according to the present embodiment, a liquid crystal layer 20 including nematic liquid crystal molecules having negative dielectric anisotropy is interposed between a pair of substrates (upper and lower substrates) 12a and 12b.

The substrates 12a and 12b each include an insulating transparent substrate formed of glass or the like. In the substrates 12a and 12b, a transparent electrode is formed on the surface of the substrate on the side of the liquid crystal layer 20. Further, vertically alignable alignment layers 10a and 10b are formed on the corresponding transparent electrodes. One of the substrates 12a and 12b functions as a driving element substrate (for example, a TFT substrate) in which a driving element (switching element) is formed in each of pixels (or subpixels). The other of the substrates 12a and 12b functions as a color filter substrate (a CF substrate) in which a color filter is formed corresponding to each of the pixels (or subpixels) in the driving element substrate. Namely, one of the substrates 12a and 12b is the color filter substrate, and the other is the driving element substrate. In the driving element substrate, the transparent electrode is connected to the driving element. The transparent electrode is formed in a matrix form, and functions as a pixel electrode. Meanwhile, in the color filter substrate, the transparent electrode is uniformly formed across the whole display region, and functions as a counter electrode (common electrode). Further, in the substrates 12a and 12b, a polarizer is disposed on the surface thereof opposed to the liquid crystal layer 20. The polarizers are disposed, for example in a cross-Nicol state. A cell thickness keeper (spacer) for keeping the thickness of the cell constant is disposed in a predetermined position (for example, in a non-display region) between the substrates 12a and 12b.

Examples of the driving element substrate include those in which (1) a scanning signal line, (2) a driving element such as TFT, (3) a data signal line, and (4) a pixel electrode formed with a transparent electrode are sequentially formed on the glass substrate to dispose the scanning signal lines and the data signal lines intersecting in a grid form on the glass substrate with an insulating layer being interposed therebetween, and the driving element and the pixel electrode are disposed at every point of intersection.

Examples of the color filter substrate include those in which (1) a black matrix (BM), (2) a color filter, (3) a protective film, and (4) a common electrode formed with a transparent electrode are sequentially formed on the glass substrate to dispose the BM in a grid form on the substrate, and a color filter is disposed in a region sectioned by the BM.

The material for the substrates 12a and 12b, that for the transparent electrode, and the material for liquid crystal molecules are not particularly limited.

As shown in Fig. 2(b), the alignment layer 10a may include only a vertical photo-alignment layer (first constitutional portion) 2a and the alignment layer 10b may include only a vertical photo-alignment layer (first constitutional portion) 2b. Alternatively, as shown in Fig. 2(a), the alignment layer 10a may include an electrical property improving layer (second constitutional portion) 1a and a vertical photo-alignment layer (first constitutional portion) 2a in the stated order from the substrate 12a and the alignment layer 10b may include an electrical property improving layer (second constitutional portion) 1b and a vertical photo-alignment layer (first constitutional portion) 2b in the stated order from the substrate 12b. The inner electrical property improving layers 1a and 1b are a polymer layer for improving the electrical properties of the alignment layer 10a and a polymer layer for improving the electrical properties of the alignment layer 10b, respectively. The electrical property improving layer does not need to positively control and align the liquid crystal molecules. The layer can suppress the DC image sticking. The electrical property improving layers 1a and 1b are formed with the second constitutional material, and contain the non-alignable substance.

Meanwhile, the vertical photo-alignment layers 2a and 2b are a layer that develops the property of controlling and aligning the liquid crystal molecules by irradiation with the light, and particularly controls and aligns the liquid crystal molecules in a substantially vertical direction. By the vertical photo-alignment layer, alignment control of the liquid crystal molecules can be performed. The vertical photo-alignment layers 2a and 2b are formed with the first constitutional material, and contain the liquid crystal alignment polymer.

In the alignment layers 10a and 10b, the film thickness is not particularly limited, and is preferably 10 to 200 nm (more suitably 20 to 180 m, and still more suitably 50 to 130 nm). At a film thickness less than 10 nm, the liquid crystal molecules may not be controlled and aligned. Meanwhile, at a film thickness more than 200 nm, an effective voltage to be applied to the liquid crystal layer 20 may be reduced, and/or the remaining DC voltage may be increased. Additionally, a uniform layer may be difficult to obtain.

In the electrical property improving layers 1a and 1b, the film thickness is not particularly limited, and is preferably 10 to 150 nm (more suitably 20 to 135 nm, and still more suitably 30 to 120 nm). At a film thickness less than 10 nm, the DC image sticking may occur. Meanwhile, at a film thickness more than 150 nm, a uniform layer may be difficult to obtain.

In the vertical photo-alignment layers 2a and 2b, the film thickness is not particularly limited, and is preferably 5 to 120 nm (more suitably 7 to 100 nm, and still more suitably 10 to 80 nm). At a film thickness less than 5 nm, alignment control may be incomplete. Meanwhile, at a film thickness more than 120 nm, the DC image sticking may be likely to occur.

2. Liquid crystal alignment agent

The liquid crystal alignment agent (varnish) in the present embodiment may contain only the first constitutional material or the first constitutional material and the second constitutional material as the constitutional material for the alignment layer. Namely, the alignment layer in the present embodiment may comprise a layer formed of the first constitutional material, or a layer formed of the first constitutional material and the second constitutional material. The first constitutional material develops the property of controlling and aligning the liquid crystal molecules by irradiation with the light. The side chain of the first constitutional material has a vertically alignable photofunctional group. The second constitutional material is a polymer. Irrespective of irradiation with the light, the second constitutional material does not positively control and align the liquid crystal molecules. The first constitutional material is finally turned into the liquid crystal alignment polymer, and the second constitutional material is finally turned into the non-alignable substance.
The liquid crystal alignment agent in the present embodiment contains a solvent (suitably an organic solvent) in the constitutional material for the alignment layer. Suitably, the constitutional material for the alignment layer is dissolved in the solvent.
The solvent contained in the liquid crystal alignment agent in the present embodiment is not particularly limited, and a solvent used for the liquid crystal alignment agent known in the related art can be properly used.
The alignment layers 10a and 10b are formed by applying the liquid crystal alignment agent to form a layer and performing the aligning treatment on the layer by irradiation with the light. The alignment layers 10a and 10b can control and align the liquid crystal molecules uniformly (uniformly at a degree in which the VATN mode can be implemented) within the plane. Thus, the alignment layers 10a and 10b are the vertical alignment layer, and control and align the liquid crystal molecules in a direction substantially vertical to the corresponding surface. Specifically, the alignment layers 10a and 10b each preferably control and align the liquid crystal molecules such that the average pretilt angle in the liquid crystal layer 20 is 87 to 89.5°, and more suitably 87.5 to 89°.
The first constitutional material and the second constitutional material contain diamine as the essential constitutional unit. Namely, the first constitutional material and the second constitutional material contain diamine as a monomer component of the essential constitutional unit.
More specifically, the first constitutional material and the second constitutional material each are a copolymer of a monomer component containing diamine and that containing acid anhydride, and have a main chain structure of polyamic acid and/or polyimide.
By use of such materials, the liquid crystal display device according to the present embodiment can be effectively driven in the VATN mode, and the average pretilt angle in the liquid crystal layer 20 can be stabilized in a suitable range for the VATN mode of 87 to 89.5°. These materials are also effective in suppressing the image sticking.
The liquid crystal alignment polymer and the non-alignable substance each may have a main chain structure of polyamic acid and/or polyimide. At least part of the main chain structure of polyamic acid is usually imidized in the baking step. Namely, even if the first constitutional material and the second constitutional material each have the main chain structure of polyamic acid, the liquid crystal alignment polymer and the non-alignable substance each usually have the main chain structure of polyimide.

2-1. First constitutional material

Next, the first constitutional material will be described more in detail using Figs. 3 and 4.
As shown in Fig. 3, the first constitutional material is a polyamic acid or polyimide in which an acid anhydride unit (unit surrounded by the solid line in Fig. 3) and a diamine unit having a side chain 21a having a vertically alignable photofunctional group (first constitutional unit, photo-alignable diamine unit, unit surrounded by the dashed line in Fig. 3) are alternately disposed.
Not all the diamine units may be the photo-alignable diamine unit. Namely, as shown in Fig. 4, the diamine unit may have not only a photo-alignable diamine unit (unit surrounded by the dashed line in Fig. 4), but also a diamine unit having a side chain 21b having no photofunctional group (second constitutional unit, non-photo-alignable diamine unit, unit surrounded by the long dashed short dashed line in Fig. 4). At this time, the first constitutional material is a polyamic acid or polyimide in which an acid anhydride unit (unit surrounded by the solid line in Fig. 4) and one of the photo-alignable diamine unit and the non-photo-alignable diamine unit are alternately disposed.
The non-photo-alignable diamine unit may be a diamine unit having no alignability such as vertical alignability (non-alignable diamine unit). Preferably, the non-photo-alignable diamine unit has the same alignability as that of the photo-alignable diamine unit. Namely, the non-photo-alignable diamine unit is preferably a unit derived from a diamine used for the vertical alignment layer, namely, a unit derived from a diamine having a side chain having a vertical alignable functional group (vertical alignable diamine unit).
Thus, the first constitutional material in the present embodiment preferably contains a diamine having a side chain having a photofunctional group in at least part of the diamine unit.

The photo-alignable diamine unit has at least one photofunctional group selected from the group consisting of a cinnamate group (the following formula (1)), a chalcone group (the following formula (2)), an azobenzene group (the following formula (3)), a stilbene group (the following formula (4)), a cinnamoyl group (the following formula (5-1)), and a coumarin group (the following formula (6-1)). These photofunctional groups undergo one of a crosslinking reaction (including a dimerization reaction), an isomerization, and photo-realignment, or a composite reaction thereof by irradiation with the light, and have a function to control to align the liquid crystal molecules on the surface of the alignment layer in a desired direction according to the light irradiation condition such as an irradiation angle. More specifically, the coumarin group mainly undergoes the dimerization reaction, the cinnamate group, the chalcone group, and the stilbene group mainly undergo the dimerization reaction and the isomerization, and the azobenzene group mainly undergoes the isomerization. Examples of coumarin derivatives include compounds represented by the following formula (5). Among these, the side chain of the photo-alignable diamine unit preferably has at least one photofunctional group selected from the group consisting of the cinnamate group (absorption wavelength (λmax) of 270 nm), the chalcone group (absorption wavelength (λmax) of 300 nm), the azobenzene group (absorption wavelength (λmax) of 350 nm), and the stilbene group (absorption wavelength (λmax) of 295 nm). Thereby, the liquid crystal display device according to the present embodiment can be effectively driven in the VATN mode, and the average pretilt angle in the liquid crystal layer can be stabilized in a suitable range for the VATN mode of 87 to 89.5° (more suitably 87.5 to 89°). Such a side chain is also effective in suppressing the AC image sticking. These photofunctional groups may be used singly or in combinations of two or more.

[Chem. 2]

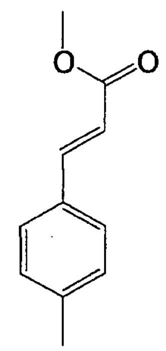
(1)

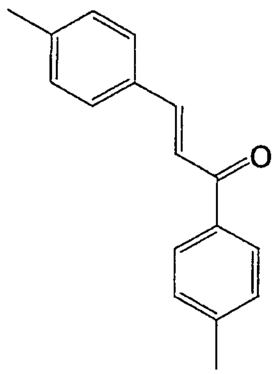
(2)

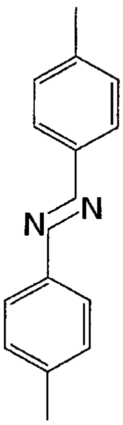
(3)

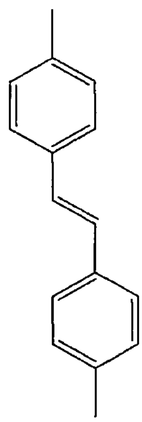
(4)

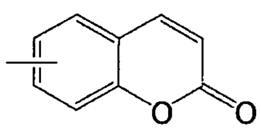
(5)

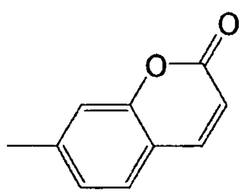
(6-1)

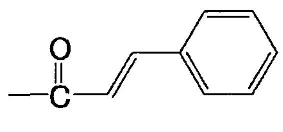
(5-1)

A halogen atom such as fluorine may be introduced into the side chain of the photo-alignable diamine unit. Examples thereof include diamines described in JP 2009-216788 A (Patent Literature 9).

Specifically, the photo-alignable diamine unit may have at least one group selected from the group consisting of groups represented by the following formula (a-1) and groups represented by the following formula (a-2).

[Chem. 3]

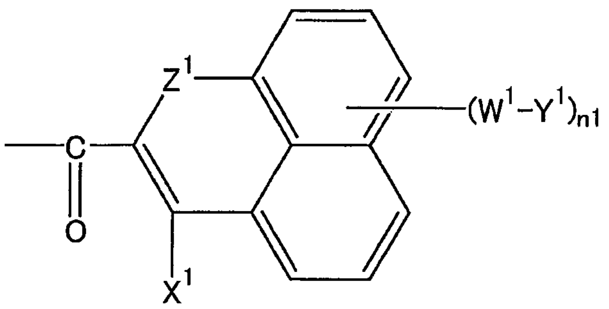

(a-1)

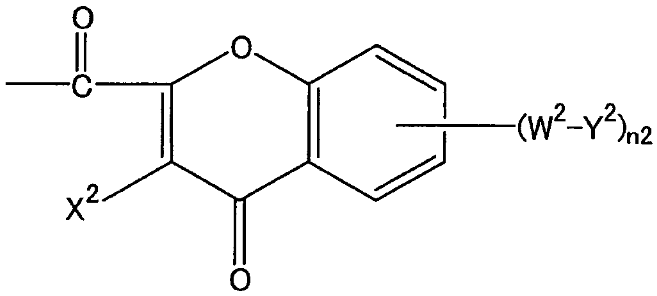

(a-2)

$X^1$ and $X^2$ in the formulas (a-1) and (a-2) each independently are a hydrogen atom, a halogen atom, or a monovalent organic group, preferably a hydrogen atom or an alkyl group having 1 to 6 carbon atoms, more preferably a hydrogen atom or a methyl group, and particularly preferably a hydrogen atom. $Y^1$ and $Y^2$ each independently are a halogen atom or a monovalent organic group, preferably a fluorine atom or a monovalent organic group having 1 to 30 carbon atoms, more preferably an alkyl group having 1 to 20 carbon atoms and optionally substituted with fluorine or a monovalent organic group having 3 to 30 carbon atoms and an alicyclic structure. Specific examples of the monovalent organic group can include an amyl group, a hexyl group, an octyl group, a decyl group, a dodecyl group, a tetradecyl group, a hexadecyl group, an octadecyl group, a trifluoromethyl group, a 2,2,2-trifluoroethyl group, a 3,3,3-trifluoropropyl group, a 4,4,4-trifluorobutyl group, a perfluoroethyl group, a 2,2,3,3,3-pentafluoropropyl group, a 3,3,4,4,4-pentafluorobutyl group, a 4,4,5,5,5-pentafluoroamyl group, a perfluoropropyl group, a cyclopentyl group, a cyclohexyl group, a 4-methylcyclohexyl group, a 4-ethylcyclohexyl group, a 4-propylcyclohexyl group, a 4-butylcyclohexyl group, a 4-amylcyclohexyl group, a cyclohexylmethyl group, a 4-methylcyclohexylmethyl group, a 4-ethylcyclohexylmethyl group, a 4-propylcyclohexylmethyl group, a 4-butylcyclohexylmethyl group, a 4-amylcyclohexylmethyl group, a 4-(4-amylcyclohexyl)cyclohexylmethyl group, a 4-(4-methylcyclohexyl)phenyl group, a 4-(4-ethylcyclohexyl)phenyl group, a 4-(4-propylcyclohexyl)phenyl group, a 4-(4-butylcyclohexyl)phenyl group, a 4-(4-amylcyclohexyl)phenyl group, a cholesteryl group, and a cholestanyl group. $W^1$ and $W^2$ each independently are a single bond or a divalent bonding group, preferably a single bond, an ether bond, an ester bond, a urethane bond, or a urea bond. $W^1$ is a single bond in the case where $Y^1$ is a halogen atom, and $W^2$ is a single bond in the case where $Y^2$ is a halogen atom. $Z^1$ is a single bond or a divalent organic group, preferably a single bond, a methylene group, an ethylidene group, or an isopropylidene group, more preferably a single bond or a methylene group, and particularly preferably a single bond. n1 and n2 each independently are an integer of 0 to 4, and preferably 1.

Specific examples of the groups represented by the formula (a-2) can include groups represented by the following formula (a-2-1).

[Chem. 4]

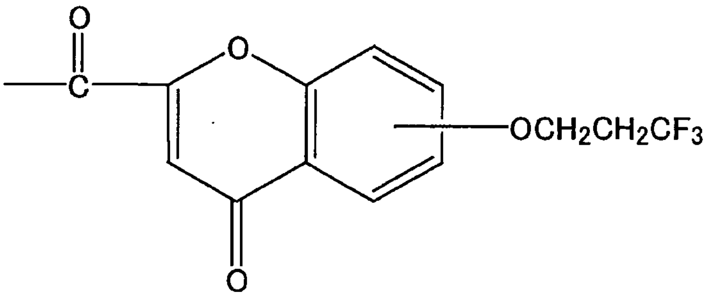
(a-2-1)

In the case where the photo-alignable diamine unit undergoes the photoisomerization and/or photo-realignment, the photo-alignable diamine unit exists as it is in the liquid crystal alignment polymer. Namely, the first constitutional unit and the constitutional unit A resultantly have the same structural formula. Meanwhile, in the case where the photo-alignable diamine unit undergoes the crosslinking reaction or the degradation reaction described later, in the liquid crystal alignment polymer, a resulting unit of the photo-alignable diamine unit subjected to crosslinking or degradation remains. Namely, the constitutional unit A resultantly has a structural formula different from that of the first constitutional unit.

The vertical alignable diamine unit may be those contained in the vertical alignment layer in the related art and having a vertical alignable functional group. Among these, those formed of diamine represented by the following formula (7), (8), or (9) are suitable. These may be used singly or in combinations of two or more.

[Chem. 5]

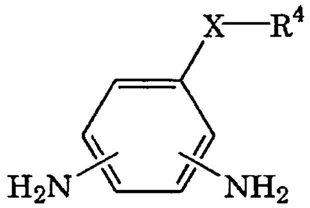
(7)

(wherein X is a single bond, -O-, -CO-, -COO-, -OCO-, - NHCO-, -CONH-, -S-, or an arylene group; $R^4$ is an alkyl group having 10 to 20 carbon atoms, a monovalent organic group having an alicyclic skeleton with 4 to 40 carbon atoms, or a monovalent organic group having 6 to 20 carbon atoms and a fluorine atom).

[Chem. 6]

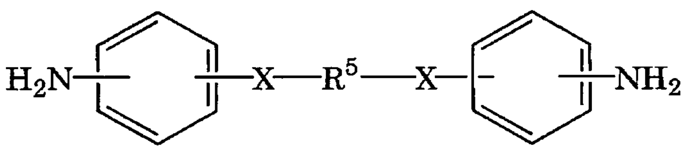
(8)

(wherein X is a single bond, -O-, -CO-, -COO-, -OCO-, - NHCO-, -CONH-, -S-, or an arylene group; $R^5$ is a divalent organic group having an alicyclic skeleton with 4 to 40 carbon atoms).

[Chem. 7]

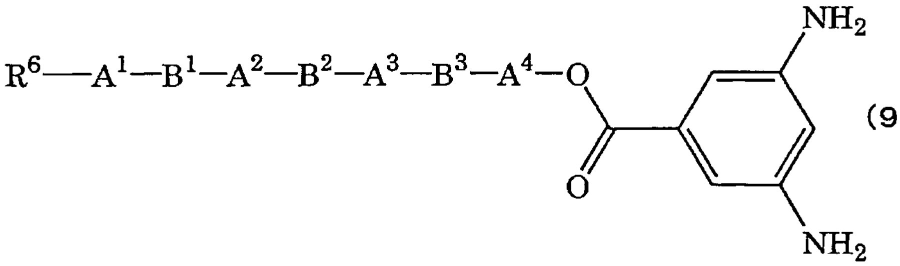

(9)

(wherein $A^1$, $A^2$, and $A^3$ each independently are 1,4-cyclohexylene or 1,4-phenylene; $A^4$ is 1,4-cyclohexylene, 1,4-phenylene, or a single bond; $B^1$, $B^2$, and $B^3$ each independently are a single bond or 1,2-ethylene; $R^6$ is alkyl having 1 to 20 carbon atoms, in which one $-CH_2-$ may be substituted with -O-).

In the formula (7), examples of the alkyl group having 10 to 20 carbon atoms, which is represented by $R^4$, include an n-decyl group, an n-dodecyl group, an n-pentadecyl group, an n-hexadecyl group, an n-octadecyl group, and an n-eicosyl group.

Examples of the organic group having an alicyclic skeleton with 4 to 40 carbon atoms, which is represented by $R^4$ in the formula (7) and $R^5$ in the formula (8), include groups having an alicyclic skeleton derived from cycloalkanes such as cyclobutane, cyclopentane, cyclohexane, and cyclodecane; groups having a steroid skeleton such as cholesterol and cholestanol; and groups having a bridged alicyclic skeleton such as norbornene and adamantane. Among these, the groups having a steroid skeleton are particularly preferable. The organic group having the alicyclic skeleton may be a group having a substituent such as a halogen atom, preferably a fluorine atom, or a fluoroalkyl group, preferably a trifluoromethyl group.

Examples of the group having 6 to 20 carbon atoms and a fluorine atom, which is represented by $R^4$ in the formula (7), include a linear alkyl group having 6 or more carbon atoms such as an n-hexyl group, an n-octyl group, and an n-decyl group; an alicyclic hydrocarbon group having 6 or more carbon atoms such as a cyclohexyl group and a cyclooctyl group; and an organic group such as aromatic hydrocarbon groups having 6 or more carbon atoms such as a phenyl group and a biphenyl group in which all or part of the hydrogen atoms is substituted with a fluorine atom or a fluoroalkyl group such as a trifluoromethyl group.

Examples of X in the formula (7) and the formula (8) include a single bond, -O-, -CO-, -COO-, -OCO-, -NHCO-, - CONH-, -S-, or an arylene group, and examples of the arylene group include a phenylene group, a tolylene group, a biphenylene group, and a naphthylene group. Among these, the groups represented by -O-, -COO-, and -OCO- are particularly preferable.

Specific examples of diamine having the group represented by the formula (7) can preferably include dodecanoxy-2,4-diaminobenzene, pentadecanoxy-2,4-diaminobenzene, hexadecanoxy-2,4-diaminobenzene, octadecanoxy-2,4-diaminobenzene, and compounds represented by the following formulas (10) to (15):

[Chem. 8]

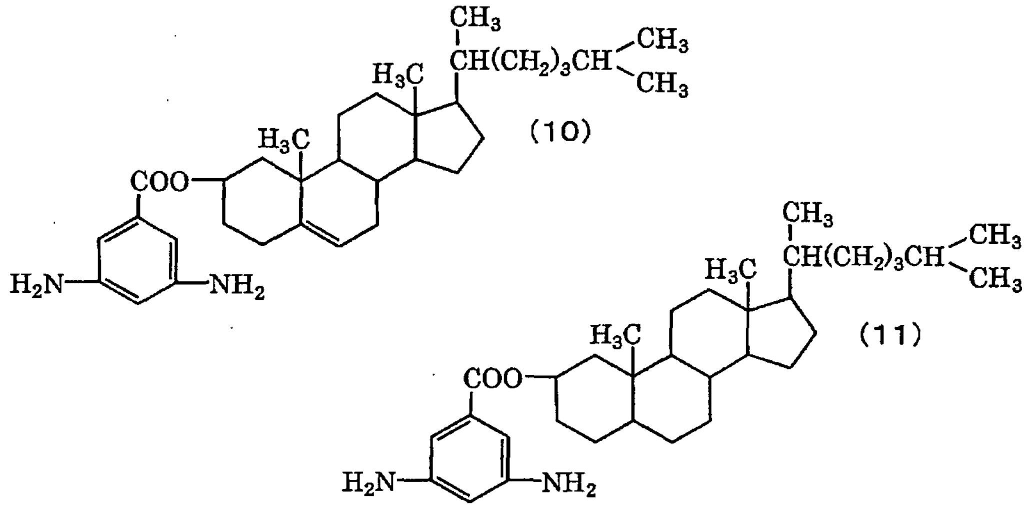

(10)

(11)

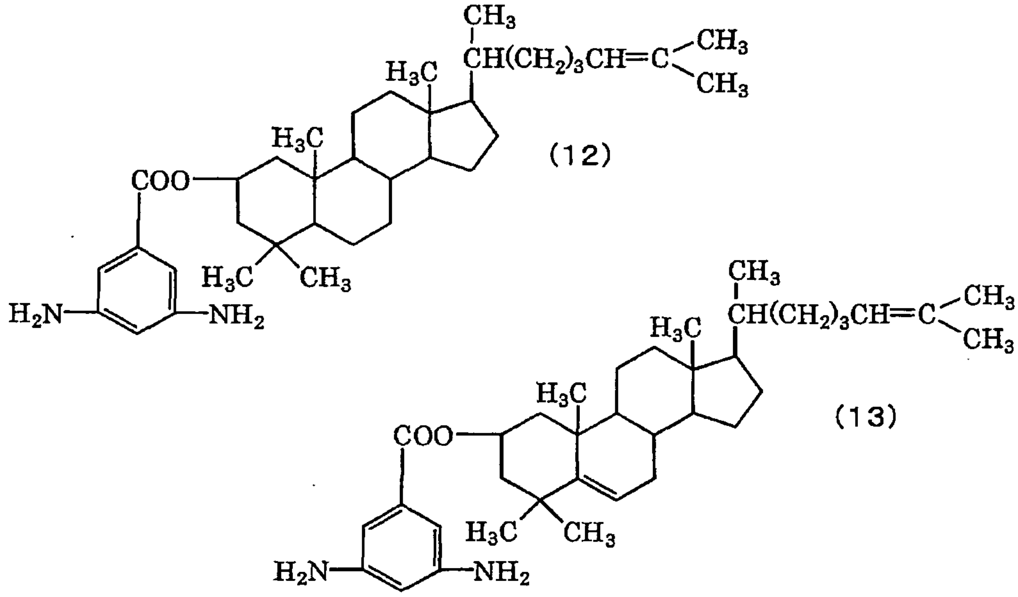

(12)

(13)

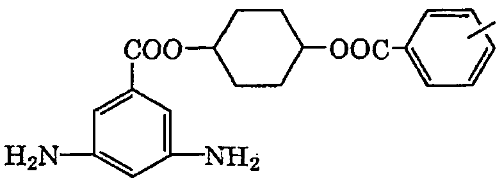

(14)

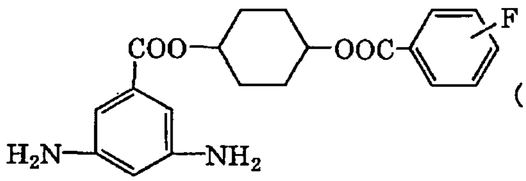

(15)

Specific examples of diamine having the group represented by the formula (8) can preferably include diamines represented by the following formulas (16) to (18).

[Chem. 9]

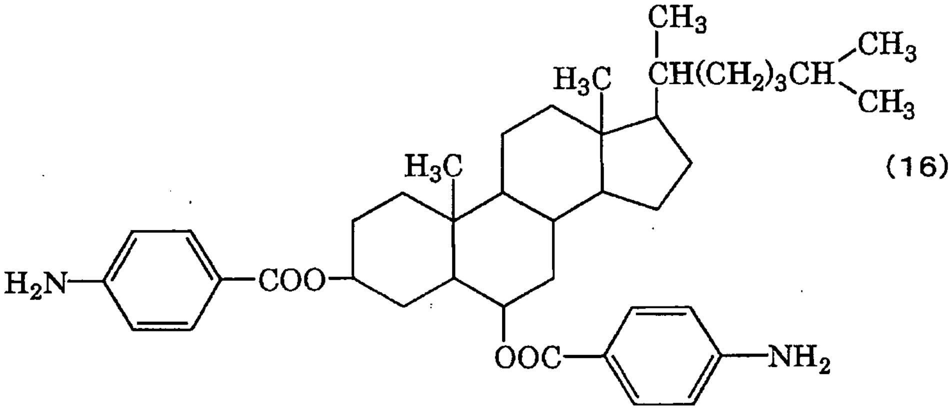

(16)

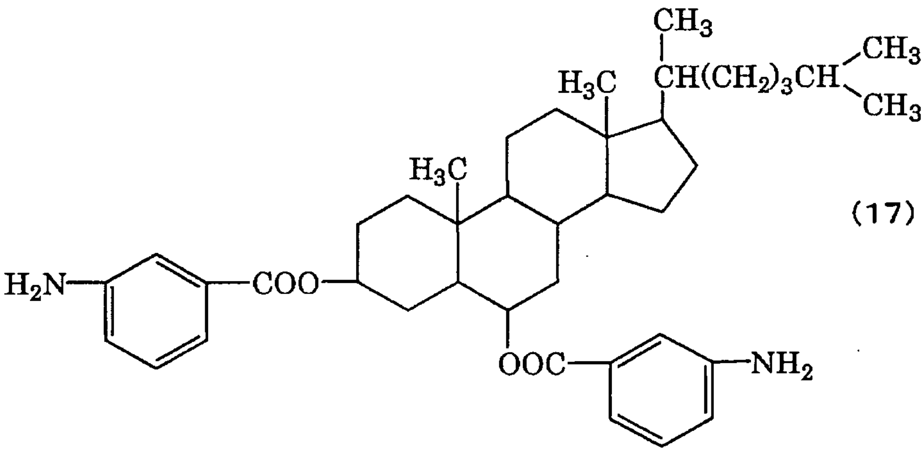

(17)

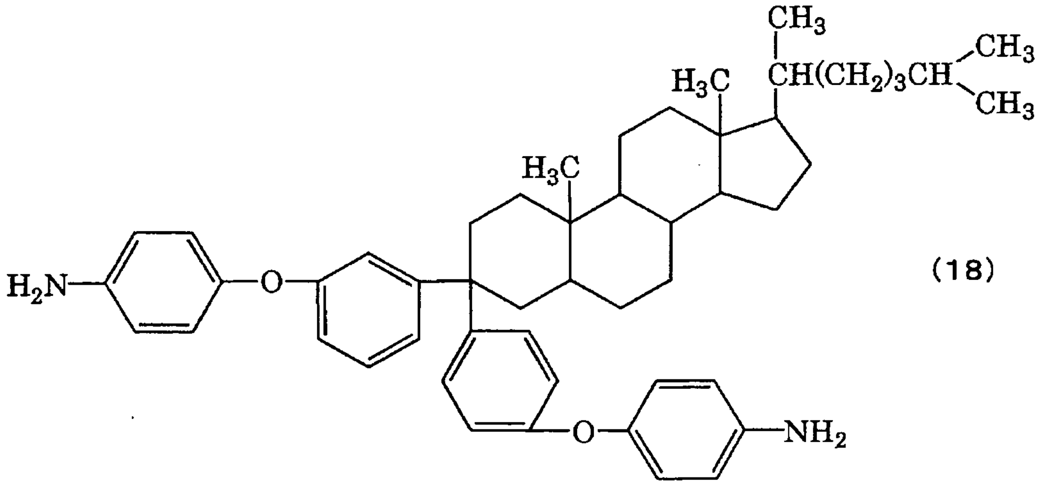

(18)

In the formula (9), $R^6$ is arbitrarily selected from alkyls having 1 to 20 carbon atoms, which may be linear or branched. One $-CH_2-$ may be substituted with -O-. Specific examples thereof include methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl, isopropyl, isobutyl, sec-butyl, t-butyl, isopentyl, neopentyl, t-pentyl, 1-methylpentyl, 2-methylpentyl, 3-methylpentyl, 4-methylpentyl, isohexyl, 1-ethylpentyl, 2-ethylpentyl, 3-ethylpentyl, 4-ethylpentyl, 2,4-dimethylhexyl, 2,3,5-triethylheptylmethoxy, ethoxy, propyloxy, butyloxy, pentyloxy, hexyloxy, methoxymethyl, methoxyethyl, methoxypropyl, methoxybutyl, methoxypentyl, methoxyhexyl, ethoxymethyl, ethoxyethyl, ethoxypropyl, ethoxybutyl, ethoxypentyl, ethoxyhexyl, hexyloxymethyl, hexyloxyethyl, hexyloxypropyl, hexyloxybutyl, hexyloxypentyl, and hexyloxyhexyl. Among these, preferable examples include propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, and eicosyl.

In the formula (9), $B^1$, $B^2$, and $B^3$ each independently are selected from a single bond or 1,2-ethylene, and the number of 1,2-ethylene in the formula (9) is preferably 0 or 1.

In the formula (9), among these, examples of particularly suitable compounds can include compounds having a combination of $R^6$, $A^1$, $A^2$, $A^3$, $A^4$, $B^1$, $B^2$, and $B^3$ shown in Tables 1 to 3 below. In the tables, B represents 1,4-phenylene, Ch represents 1,4-cyclohexylene, - represents a single bond, and E represents 1,2-ethylene. The cis/trans isomers of 1,4-cyclohexylene may coexist, but the trans isomers are preferable.

[Table 1]

| No. | $R^6$ | $A^1$ | $A^2$ | $A^3$ | $A^4$ | $B^1$ | $B^2$ | $B^3$ |
|---|---|---|---|---|---|---|---|---|
| 1 | Me | Ch | Ch | B | - | - | - | - |
| 2 | n-$C_3H_7$ | Ch | Ch | B | - | - | - | - |
| 3 | n-$C_5H_{11}$ | Ch | Ch | B | - | - | - | - |
| 4 | n-$C_7H_{15}$ | Ch | Ch | B | - | - | - | - |
| 5 | n-$C_{12}H_{25}$ | Ch | Ch | B | - | - | - | - |
| 6 | n-$C_{16}H_{32}$ | Ch | Ch | B | - | - | - | - |
| 7 | n-$C_{20}H_{41}$ | Ch | Ch | B | - | - | - | - |
| 8 | n-$C_3H_7$ | Ch | Ch | B | - | E | - | - |
| 9 | n-$C_5H_{11}$ | Ch | Ch | B | - | E | - | - |
| 10 | n-$C_7H_{15}$ | Ch | Ch | B | - | E | - | - |
| 11 | n-$C_{12}H_{25}$ | Ch | Ch | B | - | E | - | - |
| 12 | n-$C_{15}H_{31}$ | Ch | Ch | B | - | E | - | - |
| 13 | n-$C_{19}H_{39}$ | Ch | Ch | B | - | E | - | - |
| 14 | n-$C_3H_7$ | Ch | Ch | B | - | - | E | - |
| 15 | n-$C_5H_{11}$ | Ch | Ch | B | - | - | E | - |
| 16 | n-$C_7H_{15}$ | Ch | Ch | B | - | - | E | - |
| 17 | n-$C_{12}H_{25}$ | Ch | Ch | B | - | - | E | - |
| 18 | n-$C_{14}H_{29}$ | Ch | Ch | B | - | - | E | - |
| 19 | n-$C_8H_{18}O$ | Ch | Ch | B | - | - | - | - |
| 20 | n-$C_{16}H_{32}O$ | Ch | Ch | B | - | - | - | - |
| 21 | n-$C_{12}H_{25}O$ | Ch | Ch | B | - | E | - | - |
| 22 | n-$C_5H_{11}$ | Ch | B | Ch | - | - | - | - |
| 23 | n-$C_7H_{15}$ | Ch | B | Ch | - | - | - | - |
| 24 | n-$C_{12}H_{25}$ | Ch | B | Ch | - | - | - | - |

[Table 2]

| No. | $R^6$ | $A^1$ | $A^2$ | $A^3$ | $A^4$ | $B^1$ | $B^2$ | $B^3$ |
|---|---|---|---|---|---|---|---|---|
| 25 | n-$C_5H_{11}$ | B | Ch | Ch | - | - | - | - |
| 26 | n-$C_7H_{l5}$ | B | Ch | Ch | - | - | - | - |
| 27 | n-$C_{12}H_{25}$ | B | Ch | Ch | - | - | - | - |
| 28 | n-$C_{20}H_{41}$ | B | Ch | Ch | - | - | - | - |
| 29 | n-$C_3H_7$ | B | Ch | Ch | - | E | - | - |
| 30 | n-$C_7H_{15}$ | B | Ch | Ch | - | E | - | - |

(continued)

| No. | $R^6$ | $A^1$ | $A^2$ | $A^3$ | $A^4$ | $B^1$ | $B^2$ | $B^3$ |
|---|---|---|---|---|---|---|---|---|
| 31 | n-$C_5H_{11}$ | B | Ch | Ch | - | - | E | - |
| 32 | n-$C_{18}H_{37}$ | B | Ch | Ch | - | - | E | - |
| 33 | n-$C_5H_{11}$ | Ch | B | B | - | - | - | - |
| 34 | n-$C_7H_{15}$ | Ch | B | B | - | - | - | - |
| 35 | n-$C_{12}H_{25}$ | Ch | B | B | - | - | - | - |
| 36 | n-$C_{16}H_{32}$ | Ch | B | B | - | - | - | - |
| 37 | n-$C_{20}H_{41}$ | Ch | B | B | - | - | - | - |
| 38 | n-$C_5H_{11}$ | Ch | B | B | - | E | - | - |
| 39 | n-$C_7H_{15}$ | Ch | B | B | - | E | - | - |
| 40 | n-$C_3H_7$ | B | B | Ch | - | - | - | - |
| 41 | n-$C_7H_{15}$ | B | B | Ch | - | - | - | - |
| 42 | n-$C_{12}H_{25}$ | B | B | Ch | - | - | - | - |
| 43 | n-$C_5H_{11}$ | B | B | B | - | - | - | - |
| 44 | n-$C_7H_{15}$ | B | B | B | - | - | - | - |
| 45 | n-$C_5H_{11}$ | Ch | Ch | Ch | B | - | - | - |
| 46 | n-$C_7H_{15}$ | Ch | Ch | Ch | B | - | - | - |
| 47 | n-$C_{12}H_{25}$ | Ch | Ch | Ch | B | - | - | - |
| 48 | n-$C_3H_7$ | Ch | Ch | B | B | - | - | - |

[Table 3]

| No. | $R^6$ | $A^1$ | $A^2$ | $A^3$ | $A^4$ | $B^1$ | $B^2$ | $B^3$ |
|---|---|---|---|---|---|---|---|---|
| 49 | n-$C_5H_{11}$ | Ch | Ch | B | B | - | - | - |
| 50 | n-$C_7H_{15}$ | Ch | Ch | B | B | - | - | - |
| 51 | n-$C_{14}H_{29}$ | Ch | Ch | B | B | - | - | - |
| 52 | n-$C_{20}H_{41}$ | Ch | Ch | B | B | - | - | - |
| 53 | n-$C_3H_7$ | Ch | Ch | B | B | E | - | - |
| 54 | n-$C_7H_{15}$ | Ch | Ch | B | B | E | - | - |
| 55 | n-$C_{12}H_{25}$ | Ch | Ch | B | B | E | - | - |
| 56 | n-$C_3H_7$ | Ch | Ch | B | B | - | E | - |
| 57 | n-$C_5H_{11}$ | Ch | Ch | B | B | - | E | - |
| 58 | n-$C_7H_{15}$ | Ch | Ch | B | B | - | E | - |
| 59 | n-$C_7H_{15}$ | B | B | Ch | Ch | - | - | - |
| 60 | n-$C_{14}H_{29}$ | B | B | Ch | Ch | - | - | - |
| 61 | n-$C_{20}H_{41}$ | B | B | Ch | Ch | - | - | - |
| 62 | n-$C_5H_{11}$ | B | B | Ch | Ch | - | E | - |
| 63 | n-$C_7H_{15}$ | B | B | Ch | Ch | - | E | - |
| 64 | n-$C_7H_{15}$ | B | B | Ch | Ch | - | - | E |

(continued)

| No. | $R^6$ | $A^1$ | $A^2$ | $A^3$ | $A^4$ | $B^1$ | $B^2$ | $B^3$ |
|---|---|---|---|---|---|---|---|---|
| 65 | n-$C_{14}H_{29}$ | B | B | Ch | Ch | - | - | E |
| 66 | n-$C_5H_{11}$ | B | Ch | Ch | Ch | - | - | - |
| 67 | n-$C_7H_{15}$ | B | Ch | Ch | Ch | - | - | - |
| 68 | n-$C_5H_{11}$ | Ch | B | B | B | - | - | - |
| 69 | n-$C_7H_{15}$ | Ch | B | B | B | - | - | - |

Specific examples of diamine having the group represented by the formula (9) can preferably include diamines represented by the following formula (19):

[Chem. 10]

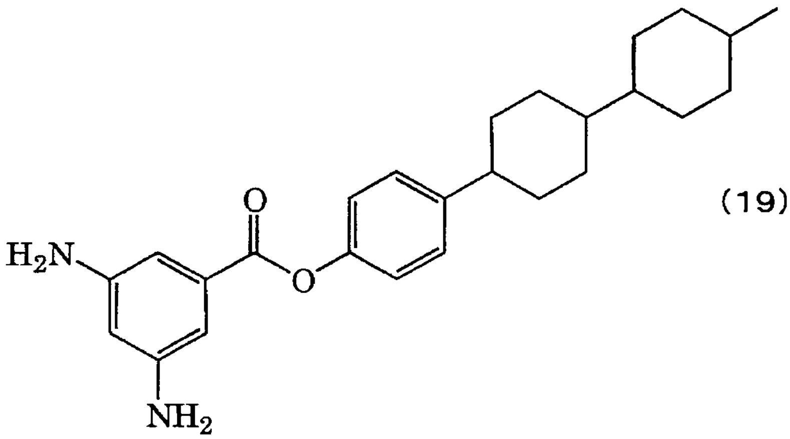

(19)

Thus, the second constitutional unit preferably has the side chain having a steroid skeleton, or the side chain having the structure in which three or four rings selected from the group consisting of 1,4-cyclohexylene and 1,4-phenylene are linearly bonded directly or via 1,2-ethylene. Thereby, the liquid crystal display device according to the present embodiment can be effectively driven in the VATN mode, and the average pretilt angle in the liquid crystal layer can be stabilized to be in a suitable range for the VATN mode of 87 to 89.5° (more suitably 87.5 to 89°). Such a side chain is also effective in suppressing the AC image sticking.

As the monomer component of the non-alignable diamine unit, those used in the related art in order to improve the electrical properties of the alignment layer may be used. Specific examples of the monomer component include aromatic diamines such as p-phenylenediamine, 1,4-bis(4-aminophenyl)benzene, 4,4'-diaminobiphenyl, 3,3'-dimethyl-4,4'-diaminobiphenyl, 3,3'-dimethoxy-4,4'-diaminobiphenyl, 3,3'-dihydroxy-4,4'-diaminobiphenyl, 3,3'-dichloro-4,4'-diaminobiphenyl, 3,3'-dicarboxy-4,4'-diaminobiphenyl, 4,4'-bis(4-aminophenoxy)biphenyl, 4,4'-diaminodiphenylmethane, diaminodiphenyl ether, 2,2-diaminodiphenylpropane, 4,4'-diaminodiphenyl sulfone, diaminobenzophenone, 1,3-bis(4-aminophenoxy)benzene, 1,4-bis(4-aminophenoxy)benzene, 4,4'-di(4-aminophenoxy)diphenyl sulfone, 2,2-bis[4-(4-aminophenoxy)phenyl]propane, and 1,1,1,3,3,3-hexafluoro-2,2-bis[4-(4-aminophenoxy)phenyl]propane; alicyclic diamines such as diaminodicyclohexylmethane, diaminodicyclohexyl ether, and diaminocyclohexane; and aliphatic diamines such as 1,2-diaminoethane, 1,3-diaminopropane, 1,4-diaminobutane, and 1,6-diaminohexane. These may be used singly or in combinations of two or more.

The structures of the non-photo-alignable diamine unit and that of the vertical alignable diamine unit usually do not change by the aligning treatment. Accordingly, these units exist as they are in the non-alignable substance. Namely, the second constitutional unit resultantly has the same structural formula as that of the constitutional unit B.

As acid anhydrides used as the first constitutional material, acid anhydrides represented by the following formula (20) (PMDA), acid anhydrides represented by the following formula (21) (CBDA), acid anhydrides represented by the following formula (22) (BPDA), acid anhydrides represented by the following formula (23) (exoHDA), acid anhydrides represented by the following formula (24) (BTDA), acid anhydrides represented by the following formula (25) (TCA),

acid anhydrides represented by the following formula (26) (NDA), and the like are suitable. These may be used singly or in combinations of two or more.

[Chem. 11]

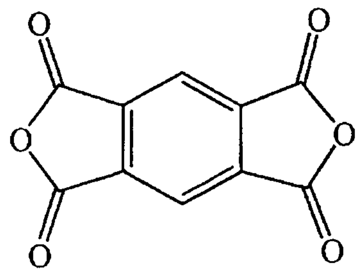
(20)

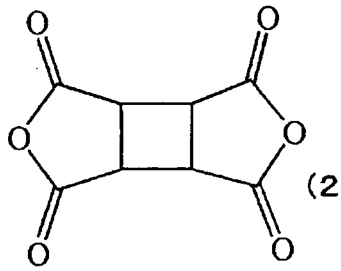
(21)

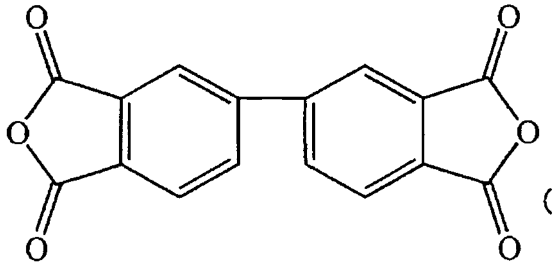
(22)

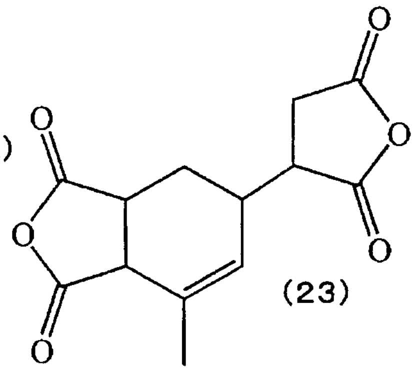
(23)

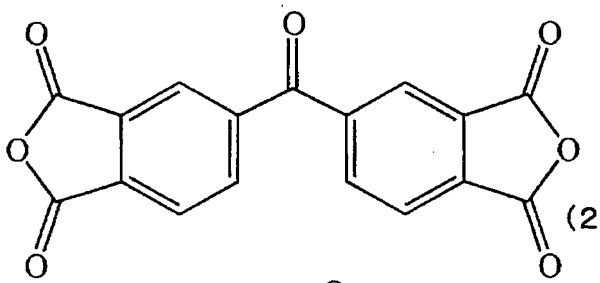
(24)

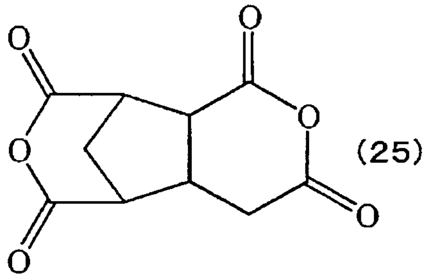
(25)

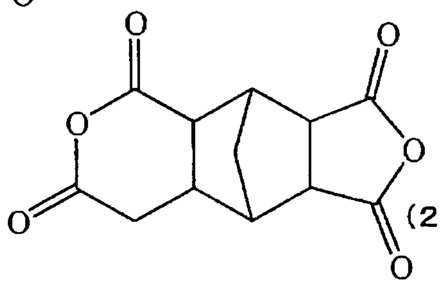
(26)

Meanwhile, the first constitutional material may be polyamide, polyamidimide, or polysiloxane. Namely, the liquid crystal alignment polymer and the first constitutional material each may have a main chain structure of polyamide. In this case, the first constitutional material can be formed by polymerizing the first constitutional unit and the second constitutional unit with dicarboxylic acid. The liquid crystal alignment polymer and the first constitutional material each may have a main chain structure of polysiloxane, namely, a main chain structure including a siloxane bond (≡Si-O-Si≡).

The liquid crystal alignment polymer and the first constitutional material each may comprise a first constitutional unit having a photofunctional group that undergoes the degradation reaction by irradiation with the light. Preferably, from the viewpoint of suppressing fluctuation in the pretilt angle, the liquid crystal alignment polymer and the first constitutional material each has a photofunctional group that undergoes one of the crosslinking reaction (including the dimerization reaction), the isomerization, and photo-realignment, or a composite reaction thereof by irradiation with the light, as described above, in the first constitutional unit. In the case where the alignment layer is formed using a decomposable material, the electrical properties thereof may be reduced. Specifically, a voltage holding rate is likely to be reduced, or the image sticking derived from reduction in the electrical properties is likely to occur. Examples of a constitutional material that undergoes a photolytic reaction (degradation reaction caused by light) to give a pretilt to the liquid crystals

(first constitutional material) include polyvinyl alcohols, polyamides, and polyimides.

2-2. Second constitutional material

The second constitutional material is not particularly limited as long as it is a material having no property of controlling and aligning the liquid crystal molecules. For example, polyimides other than polyimides usually used for alignment control of the liquid crystal molecule (which may be partial polyimide) can be properly used.

More specifically, as diamines used for the second constitutional material, those used in the related art in order to improve the electrical properties of the alignment layer may be used. Examples thereof include aromatic diamines such as p-phenylenediamine, 1,4-bis(4-aminophenyl)benzene, 4,4'-diaminobiphenyl, 3,3'-dimethyl-4,4'-diaminobiphenyl, 3,3'-dimethoxy-4,4'-diaminobiphenyl, 3,3'-dihydroxy-4,4'-diaminobiphenyl, 3,3'-dichloro-4,4'-diaminobiphenyl, 3,3'-dicarboxy-4,4'-diaminobiphenyl, 4,4'-bis(4-aminophenoxy)biphenyl, 4,4'-diaminodiphenylmethane, diaminodiphenyl ether, 2,2-diaminodiphenylpropane, 4,4'-diaminodiphenyl sulfone, diaminobenzophenone, 1,3-bis(4-aminophenoxy) benzene, 1,4-bis(4-aminophenoxy)benzene, 4,4'-di(4-aminophenoxy)diphenyl sulfone, 2,2-bis[4-(4-aminophenoxy) phenyl]propane, and 1,1,1,3,3,3-hexafluoro-2,2-bis[4-(4-aminophenoxy)phenyl]propane; alicyclic diamines such as diaminodicyclohexylmethane, diaminodicyclohexyl ether, and diaminocyclohexane; and aliphatic diamines such as 1,2-diaminoethane, 1,3-diaminopropane, 1,4-diaminobutane, and 1,6-diaminohexane. These may be used singly or in combinations of two or more.

As acid anhydrides used for the second constitutional material, acid anhydrides represented by the formulas (20) to (26) are suitable. These may be used singly or in combinations of two or more.

The liquid crystal display device according to the present embodiment is not limited to application in the VATN mode, but can be used in the horizontal alignment type such as the TN mode, the ECB mode, and the IPS mode. In this case, the AC image sticking can be suppressed, for example, by forming a horizontal alignment layer (horizontal photo-alignment layer) comprising a copolymer of a derivative of imide or amide having a photofunctional group and a derivative of imide or amide having no photofunctional group.

3. Method for producing alignment layer

Hereinafter, a method for producing an alignment layer in the present embodiment will be described. First, the monomer component of the first constitutional unit is polymerized (copolymerized) with the acid anhydride by a known method in the related art to synthesize the first constitutional material. At this time, the monomer component of the second constitutional unit may be added. Alternatively, the monomer components of the first and second constitutional units may be a diamine. In this case, all or part of the first constitutional material may be imidized by a known method in the related art (for example, a method by heating or a chemical method using a catalyst).

In the case where the second constitutional material is also used, for example, the diamine is polymerized (copolymerized) with the acid anhydride by a known method in the related art to synthesize the second constitutional material. All or part of the second constitutional material may be imidized.

The imidizing rate can be adjusted by properly changing the reaction temperature and the reaction time. Then, the first constitutional material (and the second constitutional material) is (are) refined.

Next, a liquid crystal alignment agent to apply (print) the first constitutional material (and the second constitutional material) onto a substrate is prepared. As a solvent contained in the liquid crystal alignment agent, a mixed solvent containing solvents such as γ-butyllactone (BL), N-methylpyrrolidone (NMP), butylcellosolve (BC), diethyl ether dibutyl glycol (DEDG), diisobutylketone (DIBK), and dipentyl ether (DPE) is suitable. The concentration(s) of the first constitutional material (and the second constitutional material) in the liquid crystal alignment agent is not particularly limited. For example, the concentration may be 1 to 20% by weight (suitably 2 to 10% by weight).

Next, the liquid crystal alignment agent containing the first constitutional material (and the second constitutional material) is applied onto the substrate. As a method for applying a liquid crystal alignment agent, spin coating, flexographic printing, inkjet, and the like are suitable.

After the liquid crystal alignment agent is applied, baking is performed using a hot plate for baking. In the baking, the heating temperature and the heating time can be properly set. The baking is performed, for example, for 5 to 150 minutes (suitably for 10 to 90 minutes) at 80 to 270°C (more suitably at 100 to 250°C, and still more suitably 120 to 230°C). At a temperature less than 80°C, the solvent may remain. Meanwhile, at a temperature more than 270°C, the alignment layer may be yellowed and become fragile.

Before the baking step, a pre-baking step may be performed. The pre-baking is performed using a pre-baking hot plate at 50 to 120°C for 0.5 to 10 minutes.

In the case where the first constitutional material and the second constitutional material are used, after the application step and/or during the baking step, layers are separated between the first constitutional material and the second constitutional material to provide an upper layer formed of the first constitutional material and a lower layer

formed of the second constitutional material. The upper layer is turned into a vertical photo-alignment layer by the aligning treatment by irradiation with the light (layer containing liquid crystal alignment polymer, first constitutional portion), and the lower layer is turned into the electrical property improving layer (layer containing the non-alignable substance, second constitutional portion).

It is thought that layer separation between the first constitutional material and the second constitutional material occurs attributed to the difference in polarity between the first constitutional material and the second constitutional material, and the difference in affinity with the substrate and/or the air between the first constitutional material and the second constitutional material. Accordingly, exactly, the vertical photo-alignment layer (first constitutional portion) may be formed of not only the first constitutional material, but may contain the non-alignable substance. Moreover, exactly, the electrical property improving layer (second constitutional portion) may be formed of not only the second constitutional material, but may contain the liquid crystal alignment polymer. Thus, after the application step and/or during the baking step, at least the first constitutional material may appear on the surface of the layer, and the first constitutional material and the second constitutional material may not be completely separated into two layers.

Alternatively, the alignment layer may be produced as follows: a first liquid crystal alignment agent containing the second constitutional material but no first constitutional material is applied onto a substrate, and baked to form a first layer, and subsequently, a second liquid crystal alignment agent containing the first constitutional material but no second constitutional material is applied onto the substrate having the first layer formed thereon, and baked to form a second layer. Thereby, a stack structure of the electrical property improving layer comprising the lower first layer (second constitutional portion) and the vertical photo-alignment layer comprising the upper second layer (first constitutional portion) can also be formed.

Next, the alignment layer formed on the substrate is subjected to the aligning treatment by irradiation with the light. The irradiation condition for the alignment layer can be properly set. Preferably, the light used in irradiation (exposure) of the alignment layer contains ultraviolet light (more suitably polarized ultraviolet light). More preferably, the light is the ultraviolet light (more suitably the polarized ultraviolet light). From the viewpoint of shortening a takt time in the production process, the exposure energy of the light for irradiation is preferably not more than 100 $mJ/cm^2$, and more preferably not more than 50 $mJ/cm^2$. In the case of a division aligning treatment in which using a shielding mask (photomask) or the like, each pixel is divided and exposed, the exposure energy is still more preferably not more than 20 $mJ/cm^2$. Other irradiation condition (for example, presence/absence of polarization and the irradiation angel) can be properly set.

In the liquid crystal display device according to the present embodiment, the irradiation amount can be smaller (for example, approximately 20 $mJ/cm^2$). This is because a photocrosslinkable material in which the irradiation amount can be smaller (material having a photofunctional group that undergoes the crosslinking reaction by irradiation with the light) can be suitably used as the first constitutional material.

Thus, the alignment layer in the present embodiment is formed and subjected to the aligning treatment. Thereby, the alignment layer in the present embodiment, particularly the photo-alignment layer has a structure derived from the photofunctional group (suitably, at least one structure selected from the group consisting of the structure in which the photofunctional group is bonded, the photoisomerized structure, and the photo-realignment structure). A substantially uniform pretilt angle is provided within the plane of the alignment layer.

4. Basic operation of liquid crystal display device

Hereinafter, referring to Figs. 6 to 11, the basic operation (operation principle) of the liquid crystal display device according to the present embodiment will be described.

As shown in Fig. 6, in the alignment layer 10 in the present embodiment, when the ultraviolet light polarized parallel to a light incident surface (UV light, a blank arrow in Fig. 6) is emitted inclined, for example, 40° from the normal direction of the substrate surface, the pretilt angle of the liquid crystal molecule 11 can be formed on the UV irradiation direction. The alignment layer 10 may be exposed by full plate exposure or scan exposure. Namely, the alignment layer 10 may be exposed in the state where the substrate and a light source are fixed. Alternatively, as shown by an arrow of a dotted line in Fig. 6, the alignment layer 10 may be irradiated with the light while the alignment layer 10 is scanned with the UV light in the UV scanning direction.

In the liquid crystal display device according to the present embodiment, the alignment layer may be exposed and the pair of substrates (upper and lower substrates 12) may be bonded such that the light irradiation direction of one substrate intersects substantially orthogonally to that of the other substrate when the pair of substrates is seen in planar view as shown in Fig. 7(a). Moreover, the pretilt angle of the liquid crystal molecule in the vicinity of the alignment layer provided in the upper substrate 12 may be substantially the same as that provided in the lower substrate 12. Further, a liquid crystal material containing no chiral material may be injected into the liquid crystal layer. In this case, when an AC voltage not less than the threshold value is applied between the upper and lower substrates 12, the liquid crystal molecules have a structure twisted by 90° in the normal direction of the substrate surface between the upper and lower substrates 12. Additionally, as shown in Fig. 7, when the AC voltage is applied, the average direction of the liquid crystal director

17 is directed to divide the light irradiation directions to the upper and lower substrates 12 into two when the pair of substrates is seen in planar view. As shown in Fig. 7(b), a direction of an absorption axis 16 of a polarizer (upper polarizer) disposed on the side of the upper substrate coincides with the direction of the photo-aligning treatment in the upper substrate while a direction of an absorption axis 15 of a polarizer (lower polarizer) disposed on the side of the lower substrate coincides with the direction of the photo-aligning treatment in the lower substrate. Thus, in the case where the alignment layer is subjected to the aligning treatment and the polarizer is disposed, the liquid crystal display device according to the present embodiment has the so-called VATN mode.

As shown in Fig. 8(a), in the liquid crystal display device according to the present embodiment, the alignment layer may be exposed and the upper and lower substrates 12 may be bonded such that the light irradiation direction of one substrate is substantially parallel and opposite (in antiparallel) to that of the other substrate when the pair of substrates is seen in planar view. Moreover, the pretilt angle of the liquid crystal molecule in the vicinity of the photo-alignment layer provided in the upper substrate 12 may be substantially the same as that provided in the lower substrate 12. Further, a liquid crystal material containing no chiral material may be injected into the liquid crystal layer. In this case, when no voltage is applied between the upper and lower substrates 12, the liquid crystal molecules in the vicinity of interfaces between the upper and lower substrates and the liquid crystal layers have a homogeneous structure (homogeneous alignment) having a pretilt angle of approximately 88.5°. As shown in Fig. 8(a), when the AC voltage is applied, the average direction of the liquid crystal director 17 is in a direction along the light irradiation directions to the upper and lower substrates 12 when the pair of substrates is seen in planar view. As shown in Fig. 8(b), the direction of the absorption axis 15 of the polarizer (upper polarizer) disposed on the side of the upper substrate and the direction of the absorption axis 16 of the polarizer (lower polarizer) disposed on the side of the lower substrate are deviated 45° from the direction of the photo-aligning treatment performed on the upper and lower substrates when the pair of substrates is seen in planar view. In the case where the alignment layer is subjected to the aligning treatment and the polarizers are disposed in such a manner, the liquid crystal display device according to the present embodiment has the so-called VAECB (Vertical Alignment Electrically Controlled Birefringence) mode in which the directions of the photo-aligning treatment are in antiparallel direction between the upper and lower substrates and the liquid crystal molecules are vertically aligned. In Fig. 8, an arrow of a solid line designates a direction of irradiation of the lower substrate with light (the direction of the photo-aligning treatment), and an arrow of a dotted line designates a direction of irradiation of the upper substrate with light (the direction of the photo-aligning treatment).

Next, as shown in Fig. 11, the case where each pixel in the liquid crystal display device according to the present embodiment has domain divisions will be described. In an exposing step of forming four domains in the liquid crystal display device according to the present embodiment, first, as shown in Fig. 9, using a photomask 13 having a light shielding portion 14 that divides the width of one pixel (or one subpixel) in the liquid crystal display device into two, a region corresponding to a half of the one pixel (or one subpixel) is exposed in one direction (a direction from the front to the back to the paper surface in Fig. 9), and the other half of the region is shielded from the light by the light shielding portion 14. In the next step, as shown in Fig. 10, the photomask 13 is shifted by approximately a half pitch of the pixel (or one subpixel) to shield the exposed region from the light by the light shielding portion 14, and a non-shielded portion (a non-exposed region not exposed in the step shown in Fig. 9) is exposed in a direction opposite to the direction in Fig. 9 (a direction from the back to the front to the paper surface in Fig. 10). Thereby, the region having the liquid crystal pretilt developed in one direction and the region having the liquid crystal pretilt developed in the opposite direction are formed in stripes so as to divide the width of the one pixel (or one subpixel) in the liquid crystal display device into two.

As above, domain division is performed at an equal pitch such that each of the pixels (or subpixels) in the respective substrates is divided into two. Then, the substrates are disposed (bonded) such that a dividing direction (the direction of the photo-aligning treatment) in the upper substrate 12 intersects orthogonally to that in the lower substrate 12 when the pair of substrates is seen in planar view. Further, a liquid crystal material containing no chiral material is injected into the liquid crystal layer. Thereby, as shown in Fig. 11(a), four divided domains can be formed, in which the alignment directions of the liquid crystal molecule located in the vicinity of the center in the perpendicular direction of the liquid crystal layer are different from each other in the four regions (i to iv in Fig. 11(a)), and more specifically, intersect substantially orthogonally. Namely, as shown in Fig. 11(a), when the AC voltage is applied, the average direction of the liquid crystal director 17 in each domain is directed such that the light irradiation directions in the upper and lower substrates 12 are divided into two when the pair of substrates is seen in planar view. As shown in Fig. 11(b), when the pair of substrates is seen in planar view, the direction of the photo-aligning treatment (an arrow of a dotted line in Fig. 11(a)) of the upper substrate (color filter substrate) is the same direction as the direction of the absorption axis 16 of the polarizer disposed on the side of the upper substrate, and the direction of the photo-aligning treatment (an arrow of a solid line in Fig. 11(a)) of the lower substrate (driving element substrate) is the same direction as the direction of the absorption axis 15 of the polarizer disposed on the side of the lower substrate.

At each boundary between the domains, the alignment direction of the liquid crystal molecule in one substrate coincides with the direction of the absorption axis of the polarizer, while the alignment direction of the liquid crystal molecule on the other substrate is substantially orthogonal to the substrate. Accordingly, in the case where the polarizers

are disposed in a cross-Nicol state, the boundary between the domains does not transmit the light even if the voltage is applied between the substrates. Accordingly, the boundary is seen as a dark line.

Usually, the boundary between the domains is doubly exposed. In the photo-alignment layer in the related art, the pretilt angle is not stable in the doubly exposed portion (double-exposed portion). In the double-exposed portion in the photo-alignment layer in the relate art, the AC image sticking tends to be increased, which is attributed to asymmetry in the number of the exposure treatment. However, in the alignment layer in the present embodiment, particularly by using the first constitutional material containing the first constitutional unit and the second constitutional unit, the AC image sticking in the double-exposed portion and fluctuation in the pretilt angle of the liquid crystal molecule can be effectively suppressed.

As described above, in the liquid crystal display device according to the present embodiment, in the case where the four domains are formed in which the alignment directions of the liquid crystal molecule are different from each other (intersect substantially orthogonally), high viewing angle properties, namely, a wide viewing angle can be attained.

The layout of the domain in the liquid crystal display device according to the present embodiment is not limited to four-division as shown in Fig. 11(a), but may be a form as shown in Fig. 12(a).

As a method for producing the form, first, as shown in Fig. 12(a), domain division is performed at an equal pitch such that each of the pixels (or subpixels) in the respective substrates is divided into two. When the pair of substrates is seen in planar view, the dividing direction (the direction of the photo-aligning treatment) in the upper substrate 12 intersects orthogonally to that in the lower substrate 12, and the substrates are disposed (bonded) such that the upper substrate (color filter substrate) is shifted by substantially 1/4 of the pixel pitch to the direction shown by an arrow of a dotted line in Fig. 12(a). Thereby, as shown in Fig. 12(a), four-divided domains can be formed in which the alignment directions of the liquid crystal molecules located in the vicinity of the center in the perpendicular direction of the liquid crystal layer are different from each other in the four regions (i to iv in Fig. 12(a)), and more specifically intersect substantially orthogonally. Namely, as shown in Fig. 12(a), when the AC voltage is applied, the average direction of the liquid crystal director 17 in each domain is directed such that the light irradiation directions in the upper and lower substrates 12 are divided into two when the pair of substrates is seen in planar view. As shown in Fig. 12(b), in the form, when the pair of substrates is seen in planar view, the direction of the photo-aligning treatment (an arrow of a solid line in Fig. 12(a)) in the upper substrate (color filter substrate) is the same direction as the direction of the absorption axis 16 of the polarizer disposed on the side of the upper substrate, and the direction of the photo-aligning treatment (an arrow of a dotted line in Fig. 12(a)) in the lower substrate (driving element substrate) is the same direction as the direction of the absorption axis 15 of the polarizer disposed on the side of the lower substrate. When no voltage is applied between the upper and lower substrates, the liquid crystal molecules are aligned in a direction substantially vertical to the upper and lower substrates by the alignment regulating force of the alignment layer. Meanwhile, when a voltage not less than the threshold value is applied between the upper and lower substrates, as shown in Fig. 12(c), the liquid crystal molecules 11 are twisted substantially 90° between the upper and lower substrates, and four different alignment states exist in the four domains.

5. Method for measuring concentration of the side chain on the topmost surface by XPS

The concentration of the side chain on the topmost surface was measured using a scanning X-ray Photoelectron Spectrometer PHI Quantera SXM made by ULVAC-PHI, Inc. The X-ray light source was Al:K$\alpha$, and the excitation condition was 15 kV and 25 W (1.67 mA). The beam diameter was set so as to be 100 $\mu$m when the surface of the sample was orthogonally irradiated with the X-ray. For charge neutralization, the electron beam was emitted at 30 V and 19.7 $\mu$A, and analysis was performed while Ar+ ions were emitted at 110 V and 296 pA. The measurement was performed using an angle resolving method by changing a detected angle to the surface of a sample to 5° by inclining the sample. The angle made by the X-ray irradiation direction and the detecting direction was 45°. The measurement energy step of the detector was 0.1 eV.

6. Evaluation test of the alignment state

The liquid crystal display device was determined as good if the black display could be provided when no voltage was applied, and determined as bad if light leakage occurred and the black display could not be provided. Moreover, in the liquid crystal display device, the AC voltage (30 Hz, 5 V) was repeatedly applied and not applied, and observed whether an unnecessary domain was produced in the switching. The liquid crystal display device was determined as good if an unnecessary domain was not produced, and determined as bad if an unnecessary domain was produced.

7. Measurement of average pretilt angle

The average pretilt angle in the liquid crystal display device was measured using a tilt angle measurement

apparatus OptiPro made by SHINTEC, Inc.

8. AC image sticking evaluation test

As shown in Fig. 13, the AC image sticking was examined using a liquid crystal display element (liquid crystal cell 19) including a substrate with an ITO electrode in which two divided transparent electrodes formed of ITO (electrode 18a and electrode 18b) were formed. As shown in Fig. 14, the electrode 18a in the thus-produced liquid crystal cell 19 was shorted, and an AC voltage (30 Hz, 7 V) was applied to the electrode 18b. This state was kept for 20 hours. Immediately after that, as shown in Fig. 15, the same AC voltage was applied to the electrode 18a and the electrode 18b to light on, and the difference in brightness between the electrode 18a and the electrode 18b was checked. In checking the difference in brightness, as shown in Fig. 16, the liquid crystal cell 19 having the electrode 18a and the electrode 18b was interposed between polarizers 23a and 23b disposed in a cross-Nicol state, and the liquid crystal cell 19 in this state was placed on a backlight 25. In the state where a 10% ND filter (Neutral Density filter) 24 was disposed in front of eyes, the liquid crystal cell 19 was visually evaluated from the front direction at a distance of 30 cm from the liquid crystal cell 19. In Table 4, it was determined as bad if the difference in brightness was found, and determined as good if the difference in brightness was not found. After the liquid crystal cell 19 was kept for 20 hours, the AC voltage was applied to the liquid crystal cell 19 using a signal generator (made by IWATSU TEST INSTRUMENTS CORPORATION, SG-4115). At this time, the AC voltage was 0 to 3 V. The value of the AC voltage was set to 0 to 3 V in checking the difference in brightness because the image sticking phenomenon is most easily found within this range of the voltage. The value of the AC voltage in checking the difference in brightness is not limited to the range of the voltage.

Hereinafter, using Examples, the present invention will be described more in detail, but the present invention will not be limited to only these Examples.

Example 1

First, two glass substrates having an ITO transparent electrode and a thickness of 0.7 mm were prepared.

Next, a copolymer of the diamine having the above-mentioned photofunctional group and the acid anhydride was synthesized, and as the first constitutional material, a polyimide (partial polyimide) having the imidizing rate of 46% and the concentration of the side chain based on the molecular structural formula of 8.9 was prepared. As shown in Fig. 3, the copolymer has the repeating unit including the acid anhydride unit and the diamine unit having the side chain 21a. The side chain 21a has vertical alignability, and has the photofunctional group. Fluorine was introduced into the side chain 21a, and the fluorine atom was used as the side chain indexing atom. Namely, the fluorine atom is contained only in the side chain 21a. The molecular formula of the repeating unit including the main chain structure of the polyamic acid was $C_{39}H_{33}N_2O_{10}F_5$. Accordingly, the concentration of the side chain based on the molecular structural formula was calculated from the expression $5/(39+2+10+5) \times 100$.

Moreover, a copolymer was synthesized using 2,2-dimethyl-4,4-diaminobiphenyl and the acid anhydride represented by the formula (21) (CBDA) as the monomer components, and a polyamic acid having the imidizing rate of 0% was prepared as the second constitutional material.

Next, the first constitutional material and the second constitutional material at first constitutional material/second constitutional material = 30% by weight/70% by weight were dissolved in N-methylpyrrolidone (NMP) to prepare a liquid crystal alignment agent.

Next, the liquid crystal alignment agent was applied onto the surface on the side of the transparent electrode in each of the substrates by spin coating. Then, the substrates were baked on a hot plate at 200°C for 40 minutes to form a layer having a film thickness of 100 nm.

Next, the substrates were cooled to room temperature. Then, the surface of the layer in the substrate having the ITO electrode was irradiated with (exposed to) the UV light to perform the photo-aligning treatment. More specifically, the surface of the layer was irradiated with the P-polarized ultraviolet light at a polarization degree of 10:1 from the direction of 40° to the normal of the substrate surface at an exposure energy of 20 $mJ/cm^2$. As a result of the photo-aligning treatment, an alignment layer comprising the liquid crystal alignment polymer was formed. Thus, two substrates were prepared in which the alignment layer was subjected to the aligning treatment.

Here, in the alignment layer according to Example 1, the concentration of the side chain on the topmost surface was measured by XPS. It was 21.79. Accordingly, the surface side chain density in the alignment layer according to Example 1 was 2.45. In Example 1, the concentration of the side chain on the topmost surface was measured after the photo-aligning treatment was performed. The concentration of the side chain on the topmost surface may be measured after the liquid crystal alignment agent is applied to the substrate and before the photo-aligning treatment is performed. The concentration of the side chain on the topmost surface was measured before the photo-aligning treatment and after the photo-aligning treatment. Then, it was found that the concentration is not changed before and after the photo-aligning treatment.

Next, a sealing material was applied onto one of the substrates, and the substrates were bonded to each other such that an interval therebetween was 3.5 μm. Then, the sealing material was hardened. An Nn liquid crystal material having negative dielectric anisotropy (made by Merck KGaA, MLC-6610) was injected into the interval to seal the substrates. Thus, a vertical alignment type liquid crystal cell was produced. Subsequently, polarizers were bonded to the surfaces (outer surfaces) of the substrates respectively with the polarizers being disposed in a cross-Nicol state to produce a liquid crystal display element according to Example 1.

Example 2

A liquid crystal display element according to Example 2 was produced by the same process as that in Example 1 except the followings. In the present Example, only the first constitutional material was used without using the second constitutional material. As the first constitutional material, a polyimide (partial polyimide) having the imidizing rate of 50% and the concentration of the side chain based on the molecular structural formula of 5.7 was used. The molecular formula of the repeating unit including the main chain structure of the polyamic acid was $C_{38}H_{33}N_2O_{10}F_3$. Accordingly, the concentration of the side chain based on the molecular structural formula was calculated from the expression 3/(38 + 2 + 10 + 3) x 100. In the alignment layer according to Example 2, the concentration of the side chain on the topmost surface was measured by XPS. It was 12.82. Accordingly, the surface side chain density in the alignment layer according to Example 2 was 2.24.

Example 3

A liquid crystal display element according to Example 3 was produced by the same process as that in Example 1 except the followings. In the present Example, as the first constitutional material, a polyimide (partial polyimide) having the imidizing rate of 32% and the concentration of the side chain based on the molecular structural formula of 11.9 was used. The molecular formula of the repeating unit including the main chain structure of the polyamic acid was $C_{40}H_{33}N_2O_{10}F_7$. Accordingly, the concentration of the side chain based on the molecular structural formula was calculated from the expression 7/(40 + 2 + 10 + 7) x 100. In the alignment layer according to Example 3, the concentration of the side chain on the topmost surface was measured by XPS. It was 25.33. Accordingly, the surface side chain density in the alignment layer according to Example 3 was 2.13.

Comparative Example 1

A liquid crystal display element according to Comparative Example 1 was produced by the same process as that in Example 1 except the followings. In the present Comparative Example, only the first constitutional material was used without the second constitutional material. As the first constitutional material, a polyimide (partial polyimide) having the imidizing rate of 50% and the concentration of the side chain based on the molecular structural formula of 9.4 was used. The molecular formula of the repeating unit including the main chain structure of the polyamic acid was $C_{36}H_{27}N_2O_{10}F_5$. Accordingly, concentration of the side chain based on the molecular structural formula was calculated from the expression 5/(36 + 2 + 10 + 5) x 100. In the alignment layer according to Comparative Example 1, the concentration of the side chain on the topmost surface was measured by XPS. It was 17.06. Accordingly, the surface side chain density in the alignment layer according to Comparative Example 1 was 1.81.

Comparative Example 2

A liquid crystal display element according to Comparative Example 2 was produced by the same process as that in Example 1 except the followings. In the present Comparative Example, only the first constitutional material was used without the second constitutional material. As the first constitutional material, a polyimide (partial polyimide) having the imidizing rate of 96% and the concentration of the side chain based on the molecular structural formula of 5.2 was used. The molecular formula of the repeating unit including the main chain structure of the polyamic acid was $C_{41}H_{37}N_2O_{12}F_3$. Accordingly, the concentration of the side chain based on the molecular structural formula was calculated from the expression 3/(41 + 2 + 12 + 3) x 100. In the alignment layer according to Comparative Example 2, the concentration of the side chain on the topmost surface was measured by XPS. It was 9.15. Accordingly, the surface side chain density in the alignment layer according to Comparative Example 2 was 1.76.

Comparative Example 3

A liquid crystal display element according to Comparative Example 3 was produced by the same process as that in Example 1 except the followings. In the present Comparative Example, as the first constitutional material, a

polyimide (partial polyimide) having the imidizing rate of 25% and the concentration of the side chain based on the molecular structural formula of 14.9 was used. The molecular formula of the repeating unit including the main chain structure of the polyamic acid was $C_{44}H_{38}N_2O_{11}F_{10}$. Accordingly, the concentration of the side chain based on the molecular structural formula was calculated from the expression 10/(44 + 2 + 11 + 10) × 100. In the alignment layer according to Comparative Example 3, the concentration of the side chain on the topmost surface was measured by XPS. It was 26.38. Accordingly, the surface side chain density in the alignment layer according to Comparative Example 3 was 1.77.

Example 4

First, two glass substrates having an ITO transparent electrode and a thickness of 0.7 mm were prepared.

Next, a copolymer of the diamine having the above-mentioned photofunctional group (photo-alignable diamine), the diamine having no photofunctional group (non-photo-alignable diamine), and the acid anhydride was synthesized. As the first constitutional material, a polyamic acid having the imidizing rate of 0% and the concentration of the side chain based on the molecular structural formula of 8.9 was prepared. As shown in Fig. 4, the copolymer has the repeating unit including the acid anhydride unit and the diamine unit having the side chain 21a (photo-alignable unit) and the repeating unit including the acid anhydride unit and the diamine unit having the side chain 21b (non-photo-alignable unit). The diamine unit having the side chain 21a corresponds to the photo-alignable diamine unit and the first constitutional unit while the diamine unit having the side chain 21b corresponds to the non-photo-alignable diamine unit and the second constitutional unit. The side chain 21a has vertical alignability, and has the photofunctional group. A fluorine atom was introduced into the side chain 21a, and the fluorine atom was used as the side chain indexing atom. Namely, the fluorine atom is contained only in the side chain 21a. The side chain 21b has vertical alignability, and has the above-mentioned vertical alignable functional group. In the present Example, the concentration of the side chain based on the molecular structural formula was calculated from the structural formula of the photo-alignable unit including the main chain structure of the polyamic acid. The molecular formula of the photo-alignable unit was $C_{39}H_{33}N_2O_{10}F_5$. Accordingly, the concentration of the side chain based on the molecular structural formula was calculated from the expression 5/(39 + 2 + 10 + 5) × 100. The ratio (% by weight) of the photo-alignable diamine to the non-photo-alignable diamine was photo-alignable diamine/non-photo-alignable diamine = 85% by weight/15% by weight.

Moreover, a copolymer was synthesized using 2,2-dimethyl-4,4-diaminobiphenyl and the acid anhydride represented by the formula (21) (CBDA) as the monomer components, and a polyamic acid having the imidizing rate of 0% was prepared as the second constitutional material.

Next, the first constitutional material and the second constitutional material were dissolved in N-methylpyrrolidone (NMP) at first constitutional material/second constitutional material = 30% by weight/70% by weight to prepare a liquid crystal alignment agent.

Next, the liquid crystal alignment agent was applied onto the surface on the side of the transparent electrode in each of the substrates by spin coating. Then, the substrates were baked on a hot plate at 200°C for 40 minutes to form an alignment layer having a film thickness of 100 nm.

In the alignment layer according to Example 4, the concentration of the side chain on the topmost surface was measured by XPS. It was 19.5. Accordingly, the surface side chain density in the alignment layer according to Example 4 was 2.19.

Next, the substrates were cooled to room temperature. Then, the surface of the alignment layer in the substrate having the ITO electrode was irradiated with (exposed to) the UV light to perform the photo-aligning treatment. More specifically, the surface of the layer was irradiated with the P-polarized ultraviolet light at a polarization degree of 10:1 from the direction of 40° to the normal of the substrate surface at an exposure energy of 20 $mJ/cm^2$. Thus, two substrates were prepared in which the alignment layer was subjected to the aligning treatment.

Next, a sealing material was applied onto one of the substrates, and the substrates were bonded to each other such that an interval therebetween was 3.5 μm. Then, the sealing material was hardened. An Nn liquid crystal material having negative dielectric anisotropy (made by Merck KGaA, MLC-6610) was injected into the interval to seal the substrates. Thus, a vertical alignment type liquid crystal cell was produced. Subsequently, polarizers were bonded to the surfaces (outer surfaces) of the substrates respectively with the polarizers being disposed in a cross-Nicol state to produce a liquid crystal display element according to Example 4.

Comparative Example 4

A liquid crystal display element according to Comparative Example 4 was produced by the same process as that in Example 4 except that the ratio (% by weight) of the photo-alignable diamine to the non-photo-alignable diamine was photo-alignable diamine/non-photo-alignable diamine = 40% by weight/60% by weight. In the alignment layer according to Comparative Example 4, the concentration of the side chain on the topmost surface was measured by XPS.

It was 11.89. Accordingly, the surface side chain density in the alignment layer according to Comparative Example 4 was 1.34.

Comparative Example 5

A liquid crystal display element according to Comparative Example 5 was produced by the same process as that in Example 4 except the followings.
Instead of the non-photo-alignable diamine, using a diamine having no side chain structure (diamine without a side chain), a copolymer was synthesized. The copolymer has the photo-alignable unit as that in Example 4 and a repeating unit including the acid anhydride unit and a diamine unit having no side chain (constitutional unit having no side chain structure). The ratio (% by weight) of the photo-alignable diamine to the diamine without a side chain was photo-alignable diamine/diamine without a side chain = 40% by weight/60% by weight. In the alignment layer according to Comparative Example 5, the concentration of the side chain on the topmost surface was measured by XPS. It was 12.4. Accordingly, the surface side chain density in the alignment layer according to Comparative Example 5 was 1.39.

Example 5

A liquid crystal display element according to Example 5 was produced by the same process as that in Example 1 except that the polyamic acid in Example 1 including the diamine having the photofunctional group and the acid anhydride was used as the first constitutional material without being imidized. In the alignment layer according to Example 5, the concentration of the side chain on the topmost surface was measured by XPS. It was 21.84. Accordingly, the surface side chain density in the alignment layer according to Example 5 was 2.45.

Example 6

A liquid crystal display element according to Example 6 was produced by the same process as that in Example 1 except that the polyamic acid in Example 1 including the diamine having the photofunctional group and the acid anhydride was imidized and used as the first constitutional material, and a polyimide (partial polyimide) having the imidizing rate of 15% was used. In the alignment layer according to Example 6, the concentration of the side chain on the topmost surface was measured by XPS. It was 21.06. Accordingly, the surface side chain density in the alignment layer according to Example 6 was 2.36.

Comparative Example 6

A liquid crystal display element according to Comparative Example 6 was produced by the same process as that in Example 1 except that the polyamic acid in Example 1 including the diamine having the photofunctional group and the acid anhydride was imidized and used as the first constitutional material, and a polyimide (partial polyimide) having the imidizing rate of 85% was used. In the alignment layer according to Comparative Example 6, the concentration of the side chain on the topmost surface was measured by XPS. It was 10.91. Accordingly, the surface side chain density in the alignment layer according to Comparative Example 6 was 1.23.

Example 7

First, two glass substrates having an ITO transparent electrode and a thickness of 0.7 mm were prepared.
Next, a copolymer of the diamine having the above-mentioned photofunctional group and the acid anhydride was synthesized, and as the first constitutional material, a polyamic acid having the imidizing rate of 50% and the concentration of the side chain based on the molecular structural formula of 5.7 was prepared. As shown in Fig. 3, the copolymer has the repeating unit including the acid anhydride unit and the diamine unit having the side chain 21a. The side chain 21a has vertical alignability, and has the photofunctional group. Fluorine was introduced into the side chain 21a, and the fluorine atom was used as the side chain indexing atom. Namely, the fluorine atom is contained only in the side chain 21a. The molecular formula of the repeating unit including the main chain structure of the polyamic acid was $C_{38}H_{33}N_2O_{10}F_3$. Accordingly, the concentration of the side chain based on the molecular structural formula was calculated from the expression 3/(38 + 2 + 10 + 3) x 100.
Next, the first constitutional material was dissolved in N-methylpyrrolidone (NMP) to prepare a liquid crystal alignment agent.
Next, the liquid crystal alignment agent was applied onto the surface on the side of the transparent electrode in each of the substrates by spin coating. Then, the substrates were baked on a hot plate at 200°C for 40 minutes to form an alignment layer having a film thickness of 100 nm.

In the alignment layer according to Example 7, the concentration of the side chain on the topmost surface was measured by XPS. It was 15.71. Accordingly, the surface side chain density in the alignment layer according to Example 7 was 2.75.

Next, the substrates were cooled to room temperature. Then, the surface of the alignment layer in the substrate having the ITO electrode was irradiated with (exposed to) the UV light to perform the photo-aligning treatment. More specifically, the surface of the layer was irradiated with the P-polarized ultraviolet light at a polarization degree of 10:1 from the direction of 40° to the normal of the substrate surface at an exposure energy of 20 mJ/$cm^2$. Thus, two substrates were prepared in which the alignment layer was subjected to the aligning treatment.

Next, a sealing material was applied onto one of the substrates, and the substrates were bonded to each other such that an interval therebetween was 3.5 μm. Then, the sealing material was hardened. An Nn liquid crystal material having negative dielectric anisotropy (made by Merck KGaA, MLC-6610) was injected into the interval to seal the substrates. Thus, a vertical alignment type liquid crystal cell was produced. Subsequently, polarizers were bonded to the surfaces (outer surfaces) of the substrates respectively with the polarizers being disposed in a cross-Nicol state to produce a liquid crystal display element according to Example 7.

Example 8

A liquid crystal display element according to Example 8 was produced by the same process as that in Example 7 except the followings. In the present Example, the first constitutional material and the second constitutional material were used. A copolymer was synthesized using 2,2-dimethyl-4,4-diaminobiphenyl and the acid anhydride represented by the formula (21) (CBDA) as monomer components, and a polyamic acid having the imidizing rate of 0% was used as the second constitutional material. The first constitutional material and the second constitutional material were dissolved in N-methylpyrrolidone (NMP) at first constitutional material/second constitutional material = 60% by weight/40% by weight to prepare a liquid crystal alignment agent. In the alignment layer according to Example 8, the concentration of the side chain on the topmost surface was measured by XPS. It was 14.99. Accordingly, the surface side chain density in the alignment layer according to Example 8 was 2.62.

Example 9

A liquid crystal display element according to Example 9 was produced by the same process as that in Example 8 except that the followings. In the present Example, the first constitutional material and the second constitutional material were dissolved in N-methylpyrrolidone (NMP) at first constitutional material/second constitutional material = 40% by weight/60% by weight to prepare a liquid crystal alignment agent. In the alignment layer according to Example 9, the concentration of the side chain on the topmost surface was measured by XPS. It was 14.21. Accordingly, the surface side chain density in the alignment layer according to Example 9 was 2.49.

Comparative Example 7

A liquid crystal display element according to Comparative Example 7 was produced by the same process as that in Example 8 except the followings. In the present Comparative Example, the first constitutional material and the second constitutional material were dissolved in N-methylpyrrolidone (NMP) at first constitutional material/second constitutional material = 20% by weight/80% by weight to prepare a liquid crystal alignment agent. In the alignment layer according to Comparative Example 7, the concentration of the side chain on the topmost surface was measured by XPS. It was 11.13. Accordingly, the surface side chain density in the alignment layer according to Comparative Example 7 was 1.95..

Comparative Example 8

A liquid crystal display element according to Comparative Example 7 was produced by the same process as that in Example 8 except the followings. In the present Comparative Example, the first constitutional material and the second constitutional material were dissolved in N-methylpyrrolidone (NMP) at first constitutional material/second constitutional material = 10% by weight/90% by weight to prepare a liquid crystal alignment agent. In the alignment layer according to Comparative Example 8, the concentration of the side chain on the topmost surface was measured by XPS. It was 10.83. Accordingly, the surface side chain density in the alignment layer according to Comparative Example 7 was 1.90.

Example 10

First, two glass substrates having an ITO transparent electrode and a thickness of 0.7 mm were prepared.

Next, a copolymer of the diamine having the above-mentioned photofunctional group and the acid anhydride was synthesized, and as the first constitutional material, a polyamic acid having the imidizing rate of 0% and the concentration of the side chain based on the molecular structural formula of 8.9 was prepared. As shown in Fig. 3, the copolymer has the repeating unit including the acid anhydride unit and the diamine unit having the side chain 21a. The side chain 21a has vertical alignability, and has the photofunctional group. Fluorine was introduced into the side chain 21a, and the fluorine atom was used as the side chain indexing atom. Namely, the fluorine atom is contained only in the side chain 21a. The molecular formula of the repeating unit was $C_{39}H_{33}N_2O_{10}F_5$. Accordingly, the concentration of the side chain based on the molecular structural formula was calculated from the expression $5/(39 + 2 + 10 + 5) \times 100$.

Moreover, a copolymer was synthesized using 2,2-dimethyl-4,4-diaminobiphenyl and the acid anhydride represented by the formula (21) (CBDA) as monomer components, and a polyamic acid having the imidizing rate of 0% was prepared as the second constitutional material.

Next, the first constitutional material and the second constitutional material were dissolved in N-methylpyrrolidone (NMP) at first constitutional material/second constitutional material = 20% by weight/80% by weight to prepare a liquid crystal alignment agent.

Next, the liquid crystal alignment agent was applied onto the surface on the side of the transparent electrode in each of the substrates by spin coating. Then, the substrates were baked on a hot plate at 200°C for 40 minutes to form an alignment layer having a film thickness of 100 nm.

In the alignment layer according to Example 10, the concentration of the side chain on the topmost surface was measured by XPS. It was 19.75. Accordingly, the surface side chain density in the alignment layer according to Example 10 was 2.22.

Next, the substrates were cooled to room temperature. Then, the surface of the alignment layer in the substrate having the ITO electrode was irradiated with (exposed to) the UV light to perform the photo-aligning treatment. More specifically, the surface of the layer was irradiated with the P-polarized ultraviolet light at a polarization degree of 10:1 from the direction of 40° to the normal of the substrate surface at an exposure energy of 20 $mJ/cm^2$. Thus, two substrates were prepared in which the alignment layer was subjected to the aligning treatment.

Next, a sealing material was applied onto one of the substrates, and the substrates were bonded to each other such that an interval therebetween was 3.5 μm. Then, the sealing material was hardened. An Nn liquid crystal material having negative dielectric anisotropy (made by Merck KGaA, MLC-6610) was injected into the interval to seal the substrates. Thus, a vertical alignment type liquid crystal cell was produced. Subsequently, polarizers were bonded to the surfaces (outer surfaces) of the substrates respectively with the polarizers being disposed in a cross-Nicol state to produce a liquid crystal display element according to Example 10.

Example 11

A liquid crystal display element according to Example 11 was produced by the same process as that in Example 10 except that the baking time was 20 minutes. In the alignment layer according to Example 11, the concentration of the side chain on the topmost surface was measured by XPS. It was 20.06. Accordingly, the surface side chain density in the alignment layer according to Example 11 was 2.25.

Example 12

A liquid crystal display element according to Example 12 was produced by the same process as that in Example 10 except that the baking time was 10 minutes. In the alignment layer according to Example 12, the concentration of the side chain on the topmost surface was measured by XPS. It was 20.74. Accordingly, the surface side chain density in the alignment layer according to Example 12 was 2.33.

Example 13

A liquid crystal display element according to Example 13 was produced by the same process as that in Example 10 except that the baking time was 5 minutes. In the alignment layer according to Example 13, the concentration of the side chain on the topmost surface was measured by XPS. It was 20.51. Accordingly, the surface side chain density in the alignment layer according to Example 13 was 2.30.

Example 14

A liquid crystal display element according to Example 14 was produced by the same process as that in Example 4 except the followings. In the present Example, as the first constitutional material, a polyamic acid having the imidizing rate of 0% and the concentration of the side chain based on the molecular structural formula of 5.7 was prepared. The molecular formula of the photo-alignable unit was $C_{38}H_{33}N_2O_{10}F_3$. Accordingly, the concentration of the side chain based on the molecular structural formula was calculated from the expression 3/(38 +2+10+3) $\times$ 100. The ratio (% by weight) of the photo-alignable diamine to the non-photo-alignable diamine was photo-alignable diamine/non-photo-alignable diamine = 94% by weight/6% by weight.

Next, the first constitutional material and the second constitutional material were dissolved in N-methylpyrrolidone (NMP) at first constitutional material/second constitutional material = 15% by weight/85% by weight to prepare a liquid crystal alignment agent.

In the alignment layer according to Example 14, the concentration of the side chain on the topmost surface was measured by XPS. It was 11.98. Accordingly, the surface side chain density in the alignment layer according to Example 14 was 2.10.

Example 15

A liquid crystal display element according to Example 15 was produced by the same process as that in Example 14 except the followings. In the present Example, the first constitutional material and second constitutional material were dissolved in N-methylpyrrolidone (NMP) at first constitutional material/second constitutional material = 10% by weight/90% by weight to prepare a liquid crystal alignment agent. In the alignment layer according to Example 15, the concentration of the side chain on the topmost surface was measured by XPS. It was 11.57. Accordingly, the surface side chain density in the alignment layer according to Example 15 was 2.02.

Comparative Example 9

A liquid crystal display element according to Comparative Example 9 was produced by the same process as that in Example 14 except the followings. In the present Example, the first constitutional material and the second constitutional material were dissolved in N-methylpyrrolidone (NMP) at first constitutional material/second constitutional material = 8% by weight/92% .by weight to prepare a liquid crystal alignment agent. In the alignment layer according to Comparative Example 9, the concentration of the side chain on the topmost surface was measured by XPS. It was 10.54. Accordingly, the surface side chain density in the alignment layer according to Comparative Example 9 was 1.84.

In Examples and Comparative Examples, the liquid crystal alignment polymer contained in the alignment layer contained the repeating unit in which the structure of the photofunctional group remained without changing. Accordingly, in Examples and Comparative Examples, the concentration of the side chain based on the molecular structural formula can be calculated from the first constitutional material; or the repeating unit including the structure of the side chain of the first constitutional material can be presumed from the final alignment layer, namely, the liquid crystal alignment polymer, and the concentration of the side chain based on the molecular structural formula can be calculated based on the presumed repeating unit. The same value can be obtained even if either of the calculation methods is used.

A summary of production conditions and results of evaluation in Examples and Comparative Examples are shown in the tables below.

[Table 4]

| | Ratio of first constitutional material (weight %) | Imidizing rate in first constitutional material (%) | Concentration of side chain on the topmost surface | Concentration of side chain based on the molecular structural formula | Surface side chain density | Average pretilt angle (°) | Alignment | AC image sticking |
|---|---|---|---|---|---|---|---|---|
| Example 1 | 30 | 46 | 21.79 | 8.9 | 2.45 | 89.0 | Good | Good |
| Example 2 | 100 | 50 | 12.82 | 5.7 | 2.24 | 88.3 | Good | Good |
| Example 3 | 30 | 32 | 25.33 | 11.9 | 2.13 | 89.0 | Good | Good |
| Comparative Example 1 | 100 | 50 | 17.06 | 9.4 | 1.81 | 88.7 | Good | Not good |
| Comparative Example 2 | 100 | 96 | 9.15 | 52 | 1.76 | 85.2 | Not good | Not good |
| Comparative Example 3 | 30 | 25 | 26.38 | 14.9 | 1.77 | 88.8 | Good | Not good |

[Table 5]

| | Ratio of first constitutional material (weight %) | First constitutional unit (weight %) | Second constitutional unit (weight %) | Constitutional unit with no side chain structure (weight %) | Concentration of side chain on the topmost surface | Concentration of side chain based on the molecular structural formula | Surface side chain density | Average pretilt angle (° ) | Alignment | AC image sticking |
|---|---|---|---|---|---|---|---|---|---|---|
| Example 4 | 30 | 85 | 15 | 0 | 19.5 | 89 | 2.19 | 88.3 | Good | Good |
| Comparative Example 4 | 30 | 40 | 60 | 0 | 11.89 | 8.9 | 1.34 | 90.0 | Not good | Cannot be evaluated |
| Comparative Example 5 | 30 | 40 | 0 | 60 | 12.4 | 8.9 | 1.39 | 85.2 | Not good | Not good |

[Table 6]

| | Ratio of first constitutional material (weight %) | Imidizing rate in first constitutional material (%) | Concentration of side chain on the topmost surface | Concentration of side chain based on the molecular structural formula | Surface side chain density | Average pretilt angle (°) | Alignment | AC after image |
|---|---|---|---|---|---|---|---|---|
| Example 5 | 30 | 0 | 21.84 | 8.9 | 2.45 | 89.0 | Good | Good |
| Example 6 | 30 | 15 | 21.06 | 8.9 | 2.36 | 88.8 | Good | Good |
| Comparative Example 6 | 30 | 85 | 10.91 | 8.9 | 1.23 | 86.3 | Not good | Not good |

[Table 7]

| | Ratio of first constitutional material (weight %) | Concentration of side chain on the topmost surface | Concentration of side chain based on the molecular structural formula | Surface side chain density | Average pretilt angle (°) | Alignment | AC after image |
|---|---|---|---|---|---|---|---|
| Example 7 | 100 | 15.71 | 5.7 | 2.75 | 88.6 | Good | Good |
| Example 8 | 60 | 14.99 | 5.7 | 2.62 | 88.4 | Good | Good |
| Example 9 | 40 | 14.21 | 5.7 | 2.49 | 882 | Good | Good |
| Comparative Example 7 | 20 | 11.13 | 5.7 | 1.95 | 87.9 | Good | Not good |
| Comparative Example 8 | 10 | 10.83 | 5.7 | 1.90 | 85.0 | Not good | Not good |

[Table 8]

| | Ratio of first constitutional material (weight %) | Baking time (min) | Concentration of side chain on the topmost surface | Concentration of side chain based on the molecular structural formula | Surface side chain density | Average pretilt angle (°) | Alignment | AC after image |
|---|---|---|---|---|---|---|---|---|
| Example 10 | 30 | 40 | 19.75 | 8.9 | 2.22 | 89.1 | Good | Good |
| Example 11 | 30 | 20 | 20.06 | 8.9 | 2.25 | 89.0 | Good | Good |
| Example 12 | 30 | 10 | 20.74 | 8.9 | 2.33 | 89.0 | Good | Good |
| Example 13 | 30 | 5 | 20.51 | 8.9 | 2.30 | 88.9 | Good | Good |

[Table 9]

| | Ratio of first constitutional material (weight %) | Imidizing rate in first constitutional material (%) | First constitutional unit (weight %) | Second constitutional unit (weight %) | Concentration of side chain on the topmost surface | Concentration of side chain based on the molecular structural formula | Surface side chain density | Average pretilt angle (°) | Alignment | AC after image |
|---|---|---|---|---|---|---|---|---|---|---|
| Example 14 | 15 | 0 | 94 | 6 | 11.98 | 5.7 | 2.10 | 88.6 | Good | Good |
| Example 15 | 10 | 0 | 94 | 6 | 11.57 | 5.7 | 2.02 | 88.5 | Good | Good |
| Comparative Example 9 | 8 | 0 | 94 | 6 | 10.54 | 5.7 | 1.84 | 87.8 | Good | Not good |

As shown in Tables 4 to 9, in Examples 1 to 15 in which the surface side chain density in the alignment layer is not less than 2.0, a liquid crystal cell having a good alignment state without AC image sticking could be obtained.

Meanwhile, in Comparative Examples 1 to 9 in which the surface side chain density in the alignment layer is less than 2.0, a liquid crystal cell having a good alignment state without AC image sticking could not be obtained.

In Comparative Example 4, no pretilt angle appeared, and a desired liquid crystal alignment could not be obtained. Namely, the obtained liquid crystal display element could not normally display an image, and the AC image sticking could not be evaluated.

As shown in Tables 4 to 9, in Examples 1 to 15, an average pretilt angle (87 to 89.5°) suitable for the VATN mode was formed.

As shown in Table 4, it was found that a liquid crystal cell having a good alignment state without AC image sticking could not be obtained only by increasing the concentration of the side chain on the topmost surface.

As shown in Table 5 and Table 9, from the viewpoint of increasing the surface side chain density, the proportion of the monomer component of the first constitutional unit to the total of the monomer components of the first and second constitutional units contained in the first constitutional material is preferably large. Specifically, the proportion of the photo-alignable diamine to the total of the photo-alignable diamine and non-photo-alignable diamine contained in the first constitutional material is preferably not less than 60% by weight (more suitably not less than 80% by weight).

As shown in Table 6, from the viewpoint of increasing the surface side chain density, the first constitutional material preferably has a smaller imidizing rate. Specifically, the imidizing rate in the first constitutional material is preferably not more than 80% (more suitably not more than 75%).

As shown in Table 7 and Table 9, from the viewpoint of increasing the surface side chain density, the ratio of the first constitutional material to the second constitutional material is preferably larger. Specifically, as shown in Examples 14 and 15, in the case where the first constitutional material is a polyamic acid or polyimide including the first constitutional unit and the second constitutional unit as the essential constitutional units, and the imidizing rate is not more than 30% (more suitably not more than 15%, and still more suitably not more than 5%), the proportion of the first constitutional material to the total of the first constitutional material and the second constitutional material is preferably not less than 10% by weight (more suitably not less than 12% by weight). Meanwhile, as shown in Examples 7 to 9, in the case where the first constitutional material is a polyimide including no second constitutional unit and including the first constitutional unit as the essential constitutional unit and the imidizing rate is more than 30% (more suitably not less than 40%, and still more suitably not less than 45%), the proportion of the first constitutional material to the total of the first constitutional material and the second constitutional material is preferably more than 20% by weight, and more preferably not less than 30% by weight.

As above, the proportion of the first constitutional material to the total of the first constitutional material and the second constitutional material is preferably at least more than 10% by weight, more preferably not less than 12% by weight, still more preferably more than 20% by weight, and particularly preferably not less than 30% by weight.

As shown in Table 8, it was found that reduction in the baking time hardly influenced the surface side chain density.

The present application claims priority to Patent Application No. 2010-130232 filed in Japan on June 7, 2010 under the Paris Convention and provisions of national law in a designated State, the entire contents of which are hereby incorporated by reference.

REFERENCE SIGNS LIST

1a, 1b: electrical property improving layer (second constitutional portion)
2a, 2b: vertical photo-alignment layer (first constitutional portion)
10a, 10b, 10: alignment layer
11: liquid crystal molecule
12a, 12b, 12: substrate (upper and lower substrates)
13: photomask
14: light shielding portion
15: direction of absorption axis of polarizer disposed on side of lower substrate
16: direction of absorption axis of polarizer disposed on side of upper substrate
17: average direction of liquid crystal director when AC voltage is applied
18a, 18b: electrode
19: liquid crystal display element (liquid crystal cell)
20: liquid crystal layer
21: side chain

21a: side chain having a photofunctional group
21b: side chain having no photofunctional group
23a: upper polarizer
23b: lower polarizer
24: 10% ND filter (Neutral Density filter)
25: backlight
30: side chain indexing atom
31: main chain

**Claims**

1. A liquid crystal display device comprising a liquid crystal layer including liquid crystal molecules and being interposed between a pair of substrates, and an alignment layer provided on a side of the liquid crystal layer in at least one of the substrates,
wherein the alignment layer comprises a liquid crystal alignment polymer having a property of controlling and aligning the liquid crystal molecules, and
a surface side chain density represented by the following expression is not less than 2.0:

[Math. 1]

$$\text{Surface side chain density} = \frac{\text{(Concentration of side chain on the topmost surface)}}{\text{(Concentration of side chain based on the molecular structural formula)}}$$

wherein a concentration of a side chain on a topmost surface is a concentration of a side chain indexing atom on a surface of the alignment layer, and is measured using X-ray photoelectron spectroscopy; a concentration of the side chain based on a molecular structural formula is a concentration of the side chain indexing atom contained in a repeating unit in the liquid crystal alignment polymer, and is determined from a structural formula of the liquid crystal alignment polymer; the side chain indexing atom is contained in the side chain of the liquid crystal alignment polymer but not in a main chain thereof.

2. The liquid crystal display device according to claim 1,
wherein the alignment layer is a photo-alignment layer.

3. The liquid crystal display device according to claim 2,
wherein the liquid crystal molecule has negative dielectric anisotropy,
the alignment layer aligns the liquid crystal molecules substantially vertical to the surface of the alignment layer when no voltage is applied to the liquid crystal layer, and is provided in each of the substrates, and
when the pair of substrates is seen in planar view, an alignment direction of the liquid crystal molecule on the surface of the alignment layer provided in one of the substrates intersects orthogonally to an alignment direction of the liquid crystal molecule on the surface of the alignment layer provided in the other of the substrates.

4. The liquid crystal display device according to claim 3,
wherein the liquid crystal display device includes four domains in one pixel.

5. The liquid crystal display device according to any of claims 1 to 4,
wherein the alignment layer is a vertical alignment layer.

6. The liquid crystal display device according to any of claims 1 to 5,
wherein the side chain of the liquid crystal alignment polymer includes a photofunctional group.

7. The liquid crystal display device according to claim 6,
wherein the photofunctional group is at least one photofunctional group selected from the group consisting of a coumarin group, a cinnamate group, a chalcone group, an azobenzene group, and a stilbene group.

**8.** The liquid crystal display device according to claim 6 or 7, wherein the photofunctional group undergoes at least one of a photoisomerization reaction and photo-realignment.

**9.** The liquid crystal display device according to any of claims 6 to 8, wherein the photofunctional group undergoes a photocrosslinking reaction.

**10.** The liquid crystal display device according to any of claims 1 to 9, wherein the liquid crystal alignment polymer is a polyimide, and the concentration of the side chain based on the molecular structural formula is calculated based on a repeating unit including a main chain structure of a polyamic acid when an imidizing rate of the polyimide is less than 100%, and calculated based on a repeating unit including a main chain structure of a polyamic acid supposing that the polyimide is a polyamic acid not imidized when the imidizing rate of the polyimide is 100%.

**11.** The liquid crystal display device according to any of claims 1 to 10, wherein the alignment layer contains no non-alignable substance having no property of controlling and aligning the liquid crystal molecules.

**12.** The liquid crystal display device according to any of claims 1 to 10, wherein the alignment layer contains a non-alignable substance having no property of controlling and aligning the liquid crystal molecules.

**13.** The liquid crystal display device according to claim 12, wherein the alignment layer includes a stack structure of an upper layer containing the liquid crystal alignment polymer and a lower layer containing the non-alignable substance.

**14.** The liquid crystal display device according to any of claims 1 to 13, wherein the liquid crystal alignment polymer comprises a constitutional unit A as an essential constitutional unit, the constitutional unit A having a property of controlling and aligning the liquid crystal molecules which is developed by irradiation with light, or comprises the constitutional unit A and a constitutional unit B as essential constitutional units, the constitutional unit B having the property of controlling and aligning the liquid crystal molecules which is developed without irradiation with light, and the concentration of the side chain based on the molecular structural formula is calculated based on a repeating unit including the constitutional unit A.

**15.** The liquid crystal display device according to any of claims 1 to 14, wherein the liquid crystal alignment polymer is formed by applying a liquid crystal alignment agent containing a first constitutional material as a material for the liquid crystal alignment polymer.

**16.** The liquid crystal display device according to claim 15, wherein the alignment layer is obtained by applying the liquid crystal alignment agent to form a layer and performing an aligning treatment on the layer by irradiation with light, and the first constitutional material develops the property of controlling and aligning the liquid crystal molecules by the irradiation with light.

**17.** The liquid crystal display device according to claim 15 or 16, wherein the side chain of the first constitutional material includes a photofunctional group.

**18.** The liquid crystal display device according to claim 17, wherein the photofunctional group is at least one photofunctional group selected from the group consisting of a coumarin group, a cinnamate group, a chalcone group, an azobenzene group, and a stilbene group.

**19.** The liquid crystal display device according to claim 17 or 18, wherein the photofunctional group undergoes at least one of a photoisomerization reaction and photo-realignment.

**20.** The liquid crystal display device according to any of claims 17 to 19, wherein the photofunctional group undergoes a photocrosslinking reaction.

**21.** The liquid crystal display device according to any of claims 15 to 20, wherein the first constitutional material is a polyamic acid or polyimide, and

the concentration of the side chain based on the molecular structural formula is calculated from a repeating unit of the polyamic acid when the first constitutional material is a polyamic acid, calculated based on a repeating unit including a main chain structure of a polyamic acid when the first constitutional material is a polyimide and the imidizing rate of the polyimide is less than 100%, and calculated based on a repeating unit including a main chain structure of a polyamic acid supposing that the polyimide is a polyamic acid not imidized when the imidizing rate of the polyimide is 100%.

**22.** The liquid crystal display device according to claim 21,
wherein the imidizing rate of the polyimide is not more than 80%.

**23.** The liquid crystal display device according to any of claims 15 to 22,
wherein the liquid crystal alignment agent contains no second constitutional material having no property of controlling and aligning the liquid crystal molecules.

**24.** The liquid crystal display device according to any of claims 15 to 22,
wherein the liquid crystal alignment agent contains the first constitutional material and a second constitutional material having no property of controlling and aligning the liquid crystal molecules.

**25.** The liquid crystal display device according to claim 24,
wherein a proportion of the first constitutional material to a total of the first constitutional material and the second constitutional material is not less than 10% by weight.

**26.** The liquid crystal display device according to claim 24 or 25,
wherein the alignment layer has a stack structure of an upper layer formed using the first constitutional material and a lower layer formed using the second constitutional material.

**27.** The liquid crystal display device according to any of claims 15 to 26,
wherein the first constitutional material comprises a first constitutional unit as an essential constitutional unit, the first constitutional unit having a property of controlling and aligning the liquid crystal molecules which is developed by irradiation with light, or comprises the first constitutional unit and a second constitutional unit as essential constitutional units, the second constitutional unit having a property of controlling and aligning the liquid crystal molecules which is developed without irradiation with light, and
the concentration of the side chain based on the molecular structural formula is calculated based on a repeating unit including the first constitutional unit.

**28.** The liquid crystal display device according to claim 27,
wherein the first constitutional material comprises the first constitutional unit and the second constitutional unit as essential constitutional units, and
a proportion of a monomer component of the first constitutional unit to a total of the monomer component of the first constitutional unit and a monomer component of the second constitutional unit is not less than 60% by weight.

**29.** The liquid crystal display device according to any of claims 1 to 28,
wherein the alignment layer controls and uniformly aligns the liquid crystal molecules.

**30.** The liquid crystal display device according to any of claims 1 to 29,
wherein the alignment layer controls and aligns the liquid crystal molecules such that an average pretilt angle in the liquid crystal layer is not less than 87°.

**31.** The liquid crystal display device according to any of claims 1 to 30,
wherein the alignment layer controls and aligns the liquid crystal molecules such that an average pretilt angle in the liquid crystal layer is not more than 89.5°.

**32.** The liquid crystal display device according to any of claims 1 to 31,
wherein the liquid crystal molecules are uniformly aligned on the alignment layer.

**33.** A liquid crystal display device comprising a liquid crystal layer including liquid crystal molecules and being interposed between a pair of substrates, and an alignment layer provided on a side of the liquid crystal layer in at least one of the substrates,

wherein the alignment layer comprises a liquid crystal alignment polymer,
the liquid crystal alignment polymer has a property of controlling and aligning the liquid crystal molecules, and is formed by applying a liquid crystal alignment agent containing a first constitutional material as a material for the liquid crystal alignment polymer, and
a surface side chain density represented by the following expression is not less than 2.0.

[Math. 2]

$$\text{Surface side chain density} = \frac{\text{(Concentration of side chain on the topmost surface)}}{\text{(Concentration of side chain based on the molecular structural formula)}}$$

wherein a concentration of a side chain on a topmost surface is a concentration of a side chain indexing atom on a surface of the alignment layer, and is measured using X-ray photoelectron spectroscopy; a concentration of the side chain based on a molecular structural formula is a concentration of the side chain indexing atom contained in a repeating unit in the first constitutional material before the liquid crystal alignment agent is applied, and is determined from a structural formula of the first constitutional material; the side chain indexing atom is contained in the side chain of the first constitutional material but not in a main chain thereof.

Fig. 1

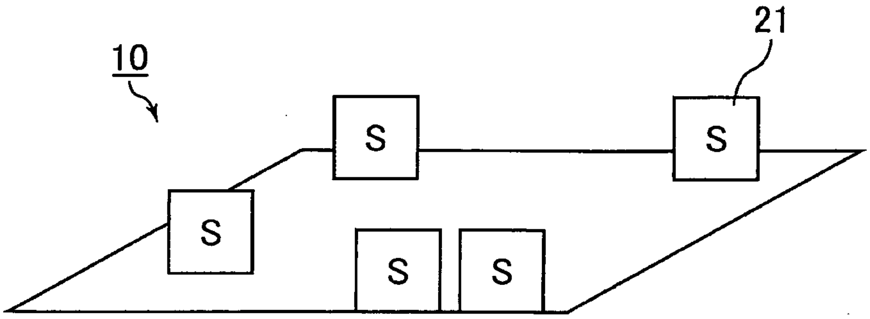
10
21
S
S
S
S
S
S

Fig. 2

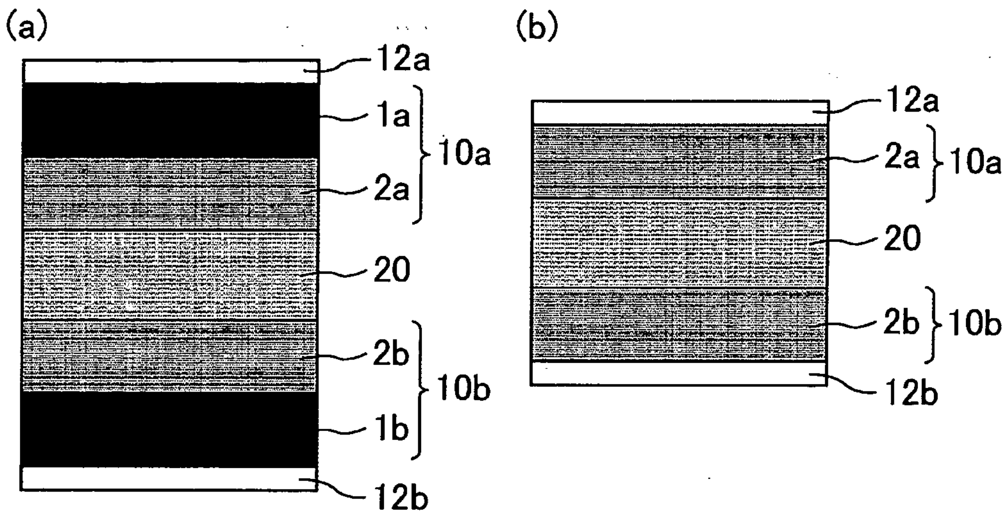
(a)
12a
1a
10a
2a
20
2b
10b
1b
12b
(b)
12a
2a
10a
20
2b
10b
12b

Fig. 3

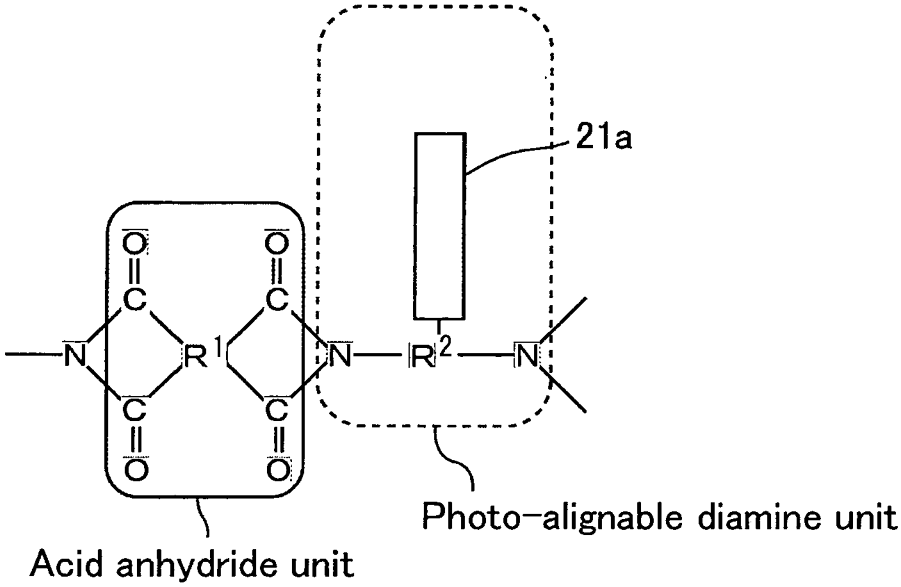
21a
Photo-alignable diamine unit
Acid anhydride unit

Fig. 4

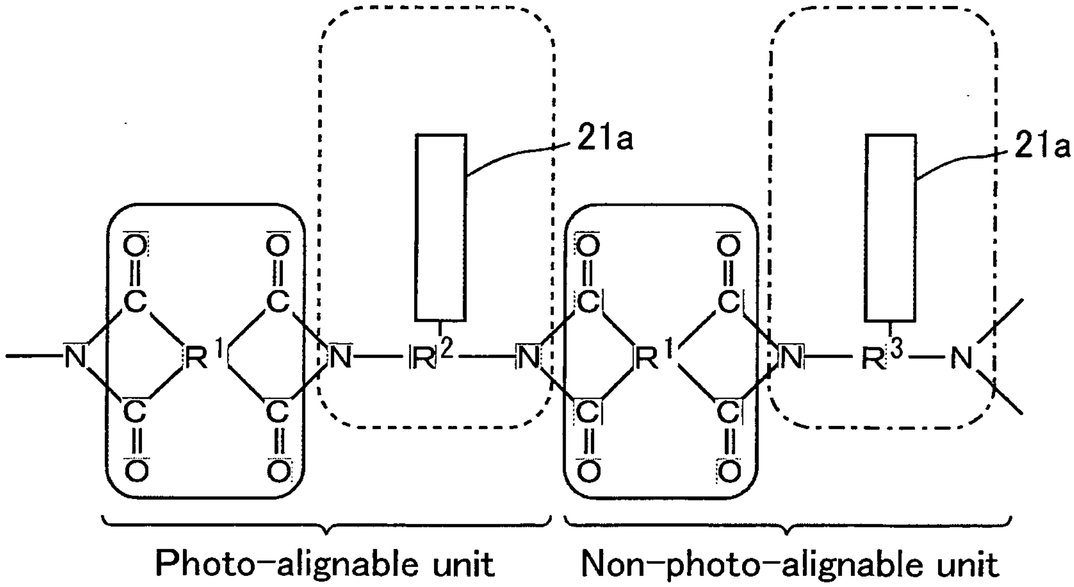
21a
21a
Photo-alignable unit
Non-photo-alignable unit

Fig. 5

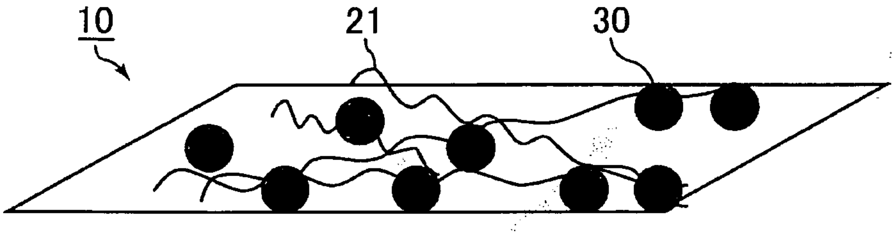


Fig. 6

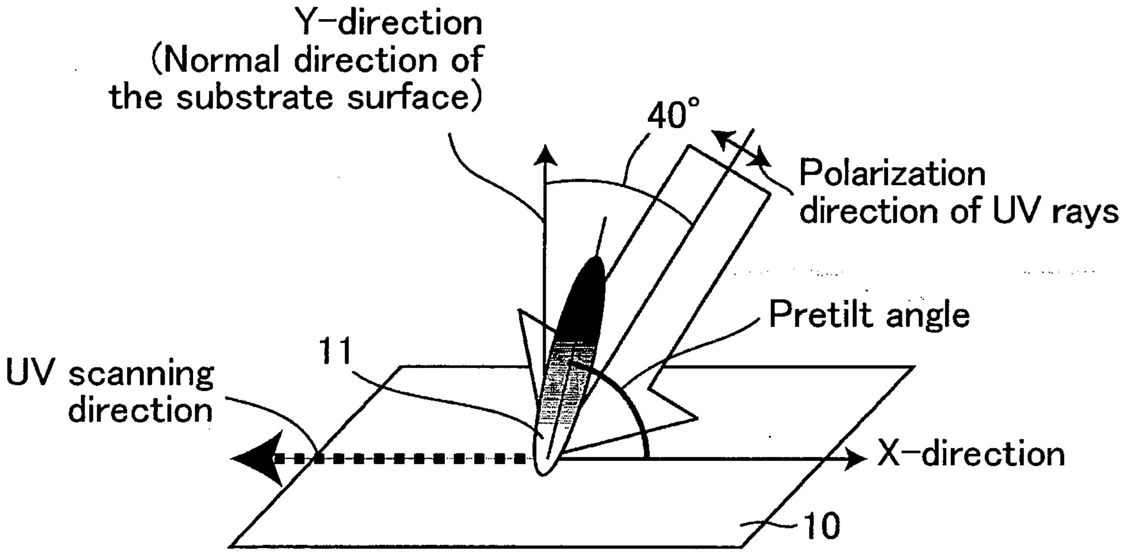


Fig. 7

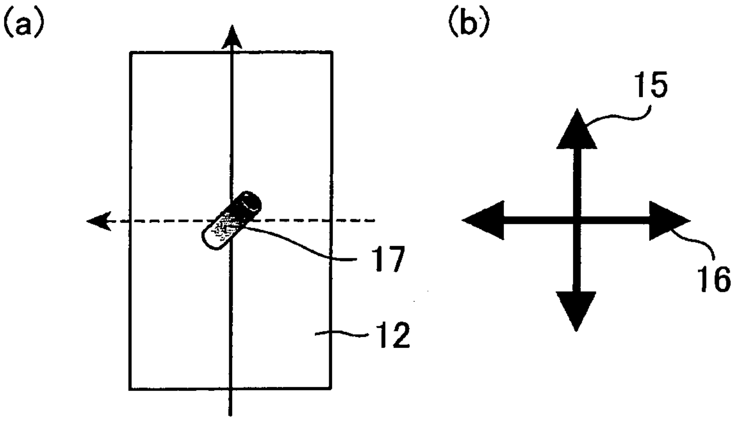

Fig. 8

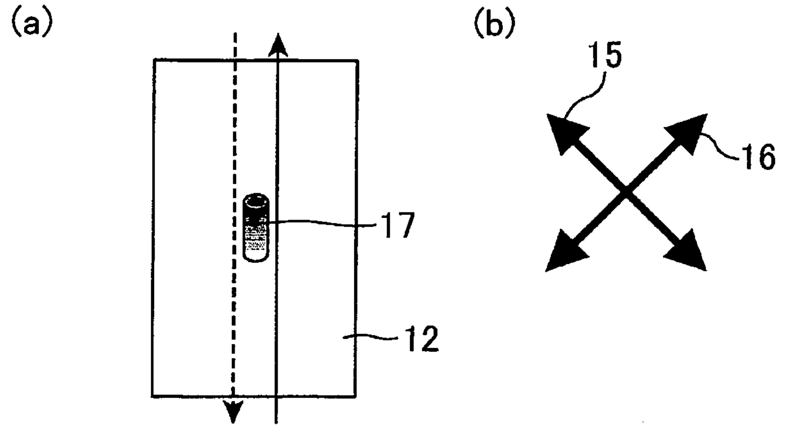


Fig. 9

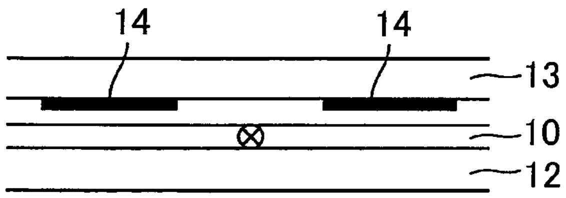


Fig. 10

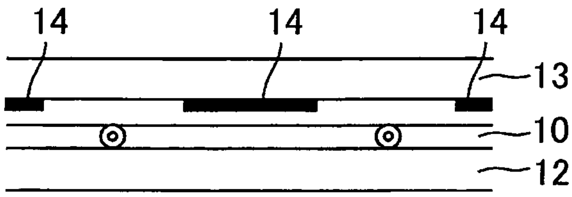


Fig. 11

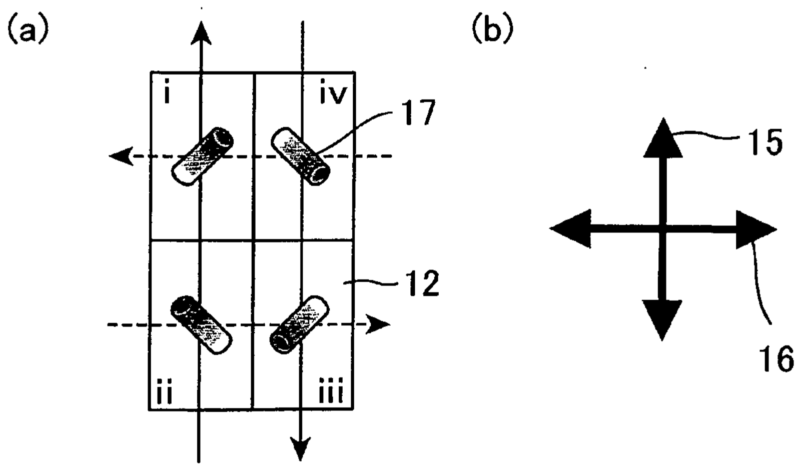

Fig. 12

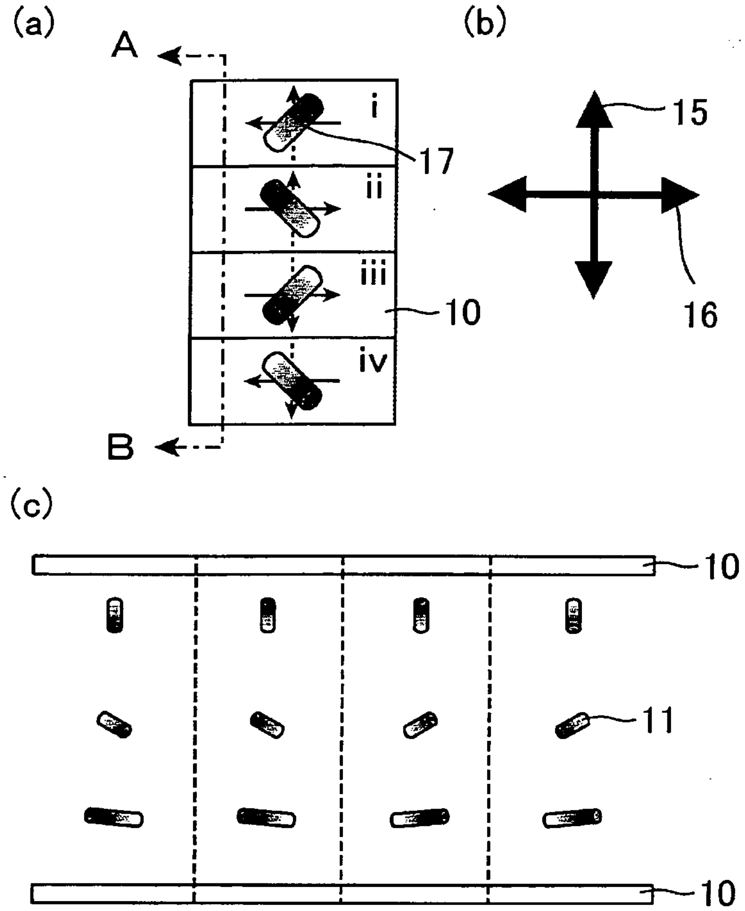


Fig. 13

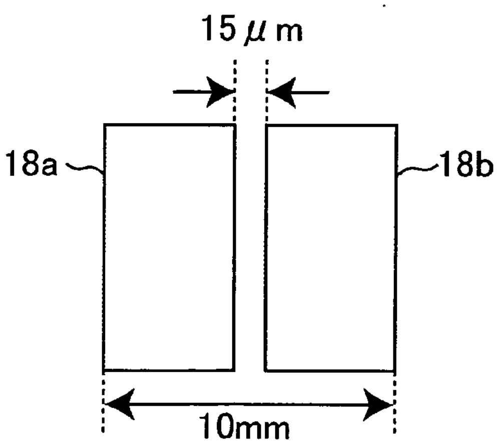

Fig. 14

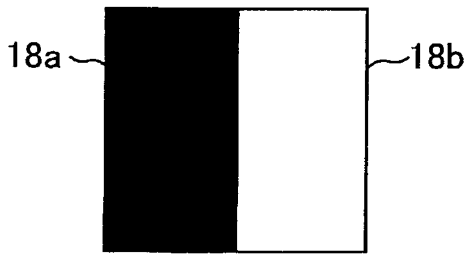


Fig. 15

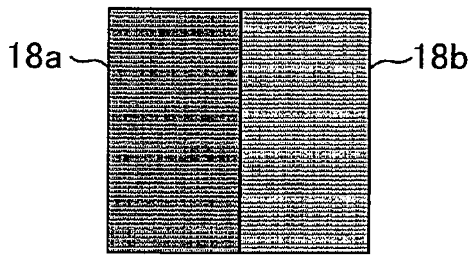


Fig. 16

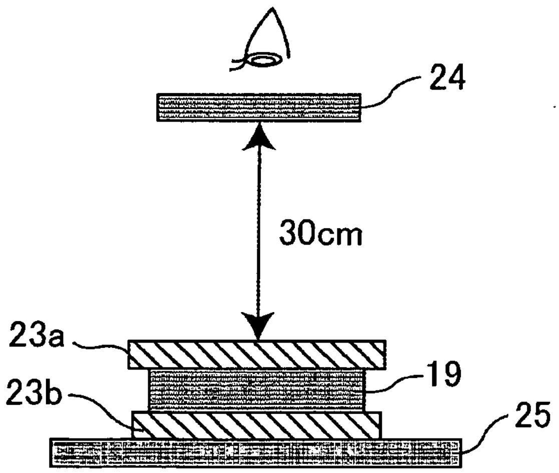

Fig. 17

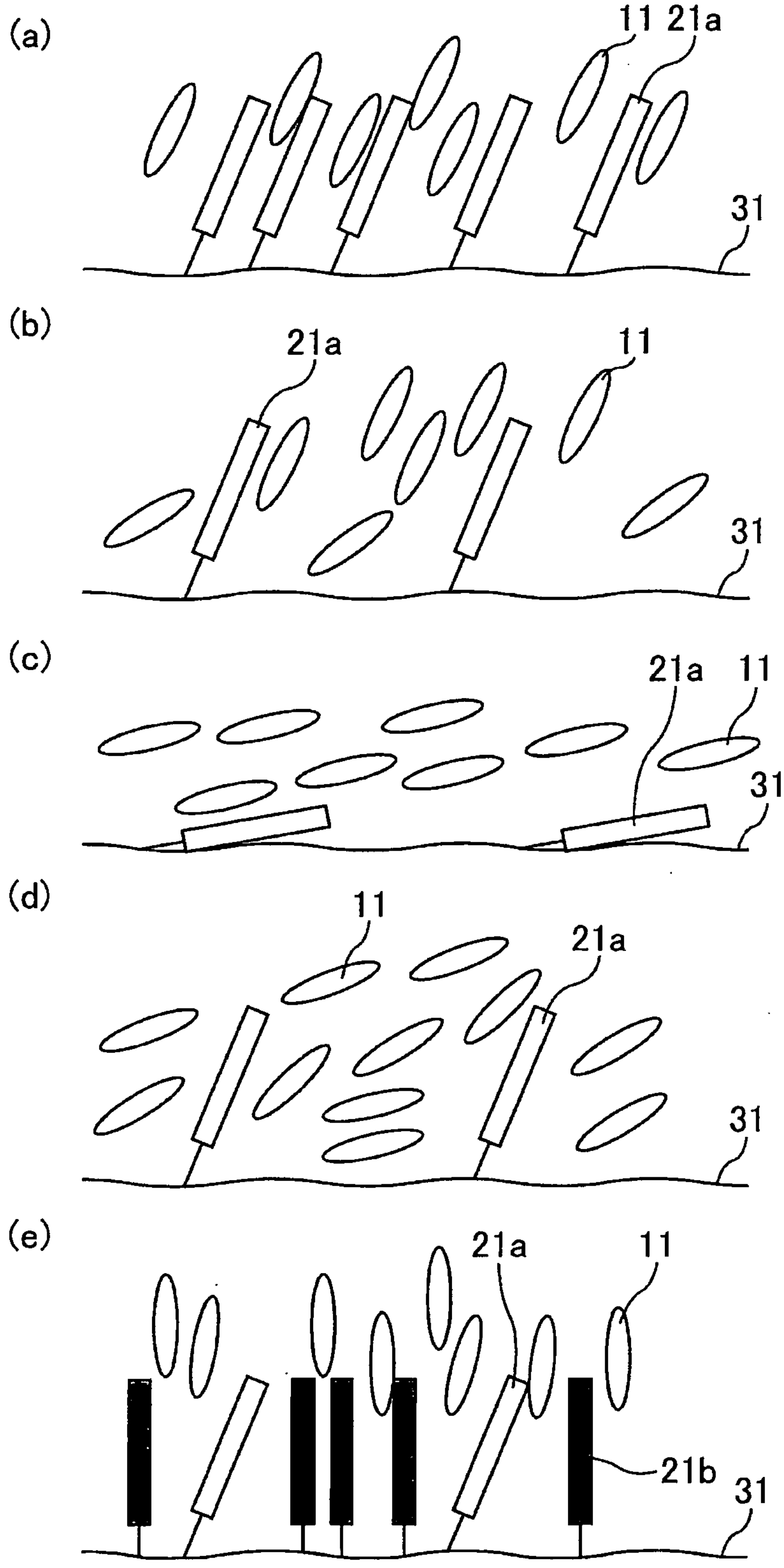

**INTERNATIONAL SEARCH REPORT**

International application No.
PCT/JP2011/062837

A. CLASSIFICATION OF SUBJECT MATTER
*G02F1/1337*(2006.01)i, *C08G73/10*(2006.01)i

According to International Patent Classification (IPC) or to both national classification and IPC

B. FIELDS SEARCHED

Minimum documentation searched (classification system followed by classification symbols)
G02F1/1337, C08G73/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2008/117615 A1 (Sharp Corp.),<br>02 October 2008 (02.10.2008),<br>entire text; all drawings<br>& US 2010/0085523 A & EP 2131233 A1<br>& CN 101606100 A | 1-33 |

☐ Further documents are listed in the continuation of Box C.

☐ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 29 July, 2011 (29.07.11) | 09 August, 2011 (09.08.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006267823 A
- JP 2005250244 A
- JP 2006010896 A
- JP 2006052317 A
- JP 2008299317 A
- JP 4434862 B
- JP 2001517719 T
- JP 2003520878 T
- JP 2009216788 A
- JP 2009520702 T
- JP 2007256484 A
- WO 2008117615 A
- WO 2010130232 A


### Non-patent literature cited in the description


- **MASAKI HASEGAWA.** Photo-Alignment: an Aligning Treatment from the Viewpoint of Production Process. *Liquid Crystal, The Japanese Liquid Crystal Society,* 25 January 1999, vol. 3 (1), 3-16
- **KIYOSHI SAWAHATA.** Trends in Development of Material for LCD Alignment Layer. *Liquid Crystal, The Japanese Liquid Crystal Society,* 25 October 2004, vol. 8 (4), 216-224